(19) Europäisches Patentamt / European Patent Office / Office européen des brevets

(11) **EP 4 055 421 B1**

(12) **EUROPEAN PATENT SPECIFICATION**

(45) Date of publication and mention
of the grant of the patent:
**20.11.2024 Bulletin 2024/47**

(51) International Patent Classification (IPC):
**G02B 5/00** *(2006.01)* **G02B 5/20** *(2006.01)*
**G02B 27/00** *(2006.01)* **G02B 27/58** *(2006.01)*

(21) Application number: **20785445.6**

(22) Date of filing: **18.09.2020**

(52) Cooperative Patent Classification (CPC):
**G02B 27/0075; G02B 5/001; G02B 5/205;
G02B 27/58**

(86) International application number:
**PCT/EP2020/076117**

(87) International publication number:
**WO 2021/089224 (14.05.2021 Gazette 2021/19)**

(54) **METHOD AND DEVICE FOR OBTAINING AN EXTENDED DEPTH OF FIELD IMAGE**

VERFAHREN UND VORRICHTUNG ZUM ERHALTEN EINER ERWEITERTEN TIEFENSCHÄRFE

PROCÉDÉ ET DISPOSITIF POUR OBTENIR UNE IMAGE DE CHAMP DE PROFONDEUR ÉTENDUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **07.11.2019 BE 201905772**

(43) Date of publication of application:
**14.09.2022 Bulletin 2022/37**

(73) Proprietor: **Innovate Precision BV
3010 Kessel-Lo (BE)**

(72) Inventor: **BOSMANS, Niels
3010 Kessel-Lo (BE)**

(74) Representative: **IPLodge bv
Technologielaan 9
3001 Heverlee (BE)**

(56) References cited:
**WO-A2-2012/166995    US-A1- 2016 057 337**

**Description**

**Field of the invention**

The present invention relates to an optical device for obtaining an extended depth of field image. More specifically it relates to optical devices comprising a multifocal optical device for extending a depth of field, i.e. a depth of field beyond the diffraction limited depth of field. The optical device can be part of a camera system or be a module that can be used in combination with a camera system or another imaging device such as a microscope or telescope. The optical device according to the present disclosure can advantageously be used for applications in for example automated inspection, optical metrology, optical character recognition, machine vision, robotics and the like.

**Background**

Camera systems typically comprise a lens system and a sensor coupled to the lens system. Such a lens system is configured for receiving multiple cones of rays from an object and for conveying at least part of the rays of the cones to the sensor where an image is formed.

One of the known problems with the lens systems used in cameras or used in combination with other optical devices, such as telescopes and microscopes, is that the objects that are imaged are only sharply in focus over a limited object distance, the object distance being the distance between the object and the first optical element of the lens system. This limited distance is known as the depth of field (DOF) and is especially important if 3-D objects are to be imaged and where the objects need to be in focus within a large depth range of the object for performing for example inspections.

The DOF depends on the numerical aperture (NA) of the camera system which is equal to n x sin $(\theta/2)$ with $\theta$ being the maximum cone angle of an axial cone of light rays that is accepted by the lens system. The parameter n is the refraction index of the medium, which for a camera system is typically air but can for example also be vacuum or a noble gas. The smaller the NA the larger is the DOF. The cone angle $\theta$ that is accepted by the lens system is determined by the pupil of the lens system which is generally determined by a so-called aperture stop which is a circular aperture.

On the other hand, the optical resolution of a camera, defined as the minimum distance between two radiation points that still can be distinguished as individuals by the camera, is inversely proportional with the numerical aperture. Hence, when camera systems are designed, a trade-off between DOF and resolution is generally to be made.

For camera systems that require micrometer resolution, i.e. resolution < 10 $\mu$m, for example for inspection systems for semiconductors or for high-resolution optical metrology applications, the DOF is mainly determined by the diffraction limited depth of field (DL-DOF) which is equal to $\lambda$ x n/ $(NA^2)$, with $\lambda$ being the wave length of the light received by the lens system.

Various types of camera systems have been proposed to extend the depth of field beyond the diffraction limit and provide an extended depth of field (EDOF). The ratio between EDOF and DL-DOF is named the extension ratio. For high-resolution applications, camera systems with an extension ratio in the range of 3 to 10 are commonly needed.

A known example for extending the DOF is to use multiple camera systems with a different focal point that are placed adjacently to each other for acquiring multiple images at various focus. However, these camera systems have the disadvantage that they are large, cumbersome and expensive.

A further example to extend the depth of field is to use a dynamic camera system where multiple images are taken sequentially while varying the focal length of the camera system by displacing one or more lenses. An example of a dynamic multifocal optical device is a tunable acoustic gradient lens (TAG) which can be used for periodically varying the focal length. Such a TAG lens is for example disclosed in US10101572B2. The images obtained with such a dynamic camera system require further image processing in order to obtain a final image having the required quality in terms of contrast and resolution.

An alternative approach is to make a passive camera system having an extended depth of field by using an axicon. An axicon is a multifocal optical device configured for focussing to a line segment. As opposed to a standard lens that is focussing an incoming plane wave to a single focal point, i.e. the focal point FP of the lens, an axicon is focussing an incident plane wave to a line segment on the optical axis. In other words, the axicon is characterized in that it focusses an incoming parallel ray to a variable focal point $MFP_i$. The location of the variable focal point $MFP_i$ along the optical axis k depends on the radial distance r between the incoming parallel ray and the optical axis k.

An example of a camera system using an axicon is disclosed by Zhai et al. in Journal of Modern Optics, vol 56, no 11, 2009, pages 1304-1308. Zhai et al. proposes to place a linear axicon in front of a CCD camera. A linear axicon is an axicon that has a conical surface and wherein the rays are refracted at a constant angle. As there is no focus in a single point but in a line segment and as the CCD camera is located in a fixed position along the line segment, the primary image obtained on the sensor is to be construed as a combination of multiple defocused images. As reported, the resulting primary images of flat 2-D objects have a low contrast and poor image resolution. The primary images have been further digitally post-processed using a filtering algorithm and, as discussed in the document, the post-processed images have a contrast that varies with the position of the object. In addition, the post-processed images, even for these simple 2-D objects, do not show a constant resolution over the entire field of view.

Indeed, images obtained with an optical device making use of a multifocal device for extending a depth of field have generally a poor quality, for example the images have a low contrast and suffer from noise and artefacts.

In US7593161B2, a similar approach is disclosed to extend the DOF, namely placing a logarithmic asphere in front of a CCD camera. The logarithmic asphere has a predetermined spherical aberration and this causes the rays crossing the asphere to focus to different focal points on the optical axis. For digitally post-processing the primary image obtained with such a camera system, an iterative "metricparameter-maximum entropy" algorithm needs to be used. A major drawback of this device disclosed in US7593161 is that the algorithm for post-processing the primary images is complex and the iterative nature of this algorithm requires a long processing time. Hence such a camera system cannot be used for applications requiring fast image acquisition of 30 less than 100 ms. US 2016/057337 A1 relates to a phase filter, an imaging optical system and an imaging system, more particularly to technique for enabling suppression of an in-plane position shift of an image point in response to defocus in a focal depth extended image subject to image processing by wavefront coding.

WO 2012/166995 A2 relates to an optical system for generating an image having extended depth of field.

**Summary**

It is an object of the present invention to provide an optical device for obtaining an extended depth of field image wherein the post-processing of the image obtained in a focal plane can be performed by a simpler and faster algorithm such that post-processing of the images can be performed in less than 100 ms, or wherein the post-processing can be eliminated. A further object is to reduce artefacts resulting from image processing.

The present invention is defined in the appended independent claims 1 and 9 relating to a method and to a corresponding optical device.

Preferred embodiments are defined in the dependent claims.

According to a first aspect of the invention, a method for obtaining an image with an extended depth of field extending between a first object distance and a second object distance is provided. The method comprises steps of: using an optical device for imaging an object or an intermediate image of an object to an image plane, and wherein the optical device comprises an imaging lens system and a multifocal optical device, and using the multifocal optical device for varying an optical power of the optical device within a range of optical powers such that an image formed at the image plane corresponds to a summation of images obtained at different optical powers, and wherein the range of optical powers is defined in relation to the extended depth of field.

The method is characterized in that it comprises: modulating an amplitude of light rays transmitted through the multifocal optical device by using a filter, and wherein a two-dimensional light transmission profile associated to the filter is expressing a relative light transmission through the filter, and the method comprises: specifying the two-dimensional light transmission profile with one or more one-dimensional light transmission curves and wherein each one-dimensional light transmission curve is expressing a relative light transmission through the filter as function of a radial distance measured in a radial direction with respect to a filter reference axis of the filter.

The method further comprises defining each of the one or more one-dimensional light transmission curves either as a ring-shaped aperture transmission curve or, alternatively, defining each of the one or more one-dimensional light transmission curves as an open-aperture transmission curve, such that for each object distance within the extended depth of field, a point spread function (PSF) associated to the object distance has an intensity of out-of-focus light rays at the image plane that is reduced when compared to an intensity of out-of-focus light rays without using the filter.

When defining one or more ring-shaped aperture transmission curves, the method is defining each curve to comprise: a) a monotonically increasing portion going from a first light transmission value at a first radial distance to a second light transmission value at a second radial distance, and b) a monotonically decreasing portion going from a third light transmission value at a third radial distance to a fourth light transmission value at a fourth radial distance, and wherein $r_1 < r_2 \leq r_3 < r_4$, with $r_1$, $r_2$, $r_3$, $r_4$ being respectively the first, the second, the third and the fourth radial distance. According to the method, the light transmission in a region between the filter reference axis and the first radial distance is within a range: $0 \leq T_{r1-k}[r] \leq 1.2 \times T_1$, with $T_{r1-k}[r]$ corresponding to the transmission in a region between the first radial distance and the filter reference axis , and $T_1$ corresponds to the first transmission value.

Alternatively, when defining one or more open-aperture transmission curves, the method is defining each curve to comprise a monotonically decreasing portion going from a first light transmission value at a first radial distance to a second light transmission value at a second radial distance larger than the first radial distance, and wherein a light transmission in a region between the filter reference axis of the filter and the first radial distance is equal to the first light transmission value or is equal to the first light transmission value within 20%, preferably within 10%.

Advantageously, by providing a filter and defining a light transmission profile such that for each object distance within the extended depth of field range, an intensity of out-of-focus light rays at the image plane is reduced, a variation of an envelope of the point spread functions is reduced and hence when defining a model PSF, e.g. an average PSF over the entire extended depth of field range, a more realistic model approximation of a PSF is obtained that is reflecting the PSF's for any of the object distances within the EDOF. In this way, artefacts, resulting from sharp transitions in the PSF's at certain object distances or variations of the shape of the various PSF's are significantly reduced. In contrast with prior art optical devices not using the filter according to the invention where after postprocessing of the image obtained in the image plane artefacts are observed.

In addition, by reducing the intensity of out-of-focus light rays of the PSF's for each of the object distances within the EDOF, the width and tails of the PSF's are reduced, which results in contrast improvement and noise reduction.

Advantageously, by providing a filter with a light transmission profile as claimed, the variation of the shape between the different PSF's is small and the post-processing using a deconvolution can be performed with a single model PSF, e.g. a single average PSF valid for the entire EDOF. This simplifies the postprocessing and reduces the time required to process the image.

The object to be imaged with the optical device according to the invention has to be construed as either a physical object or as an intermediate optical image generated by a primary optical system. Hence the optical device according to the invention can advantageously be coupled to for example a telescope or a microscope that is generating the intermediate optical image.

The first and second object distances have to be construed as the extremity object distances of the EDOF. In other words, by definition of the EDOF, any object located between the first and second object distances, is to be in focus at the image plane. Generally, within the entire EDOF a prescribed image resolution is required.

In embodiments, the first and the second object distance are corresponding to respectively a first and a second optical power of the optical device. In these embodiments, the method comprises defining the range of optical powers of the multifocal optical device such that optical powers between the first and the second optical power are forming a sub-range of the range of optical powers. In other words, the range of optical powers specified for the optical device is larger than actually needed to cover the EDOF. Advantageously, this allows to obtain, following the modulation of the amplitude of the light rays with the filter, point spread functions that have smooth tails without strong intensity variations.

In embodiments, the multifocal device is a radius-dependent multifocal optical device having a focal length varying with a radius with respect to an optical axis of the multifocal optical device. In these embodiments, a first focal length of the multifocal device at a first radius of the multifocal optical device and a second focal length of the multifocal device at a second radius of the multifocal device are contributing to respectively the first and the second optical power of the optical device. Generally, the first radius is smaller than the second radius. An example of such a radius-dependent multifocal device is an axicon.

In other embodiments, the multifocal optical device is a radius-independent multifocal optical device, preferably the radius-independent multifocal optical device is any of: a tunable acoustic gradient lens, a diffractive lens, a liquid lens or a lens with chromatic aberration.

In embodiments, the method according to the invention comprises: deconvoluting the image formed at the image plane using a deconvolution algorithm, and wherein the deconvolution algorithm is using data expressing a model point spread function or is using a mathematical approximation expressing a model point spread function, and wherein the model point spread function is representing each of the different point spread functions associated to the different object distances within the extended depth of field. The model point spread function is for example an average point spread function of the different point spread functions within the EDOF.

In embodiments, the two-dimensional light transmission profile is specified with one or more one-dimensional light transmission curves. Such a one-dimensional light transmission curve is expressing a relative light transmission through the filter as function of a radial distance measured in a radial direction with respect to a filter reference axis. In some embodiments wherein the two-dimensional light transmission profile is axial-symmetric with respect to the filter reference axis, the profile can be specified with one one-dimensional light transmission curve.

The point spread functions used for verifying if the intensity of out-of-focus light rays at the image plane is reduced when compared to an intensity of out-of-focus light rays without using the filter, have to be construed as on-axis point spread functions. An on-axis point spread function corresponds to a PSF origination from a point source located on an optical axis of the optical device.

According to a second aspect of the invention, an optical device for imaging an object or an intermediate image of an object to an image plane and for obtaining an image having an extended depth of field between a first object distance and a second object distance, is provided. The optical device comprises an imaging lens system and a multifocal optical device. The multifocal device is configured for varying an optical power of the optical device within a range of optical powers such that an image formed at the image plane corresponds to a summation of images obtained at different optical powers, and wherein the range of optical powers is defined in relation to the extended depth of field.

The optical device is characterized in that the optical device comprises a filter configured for modulating an amplitude of light rays transmitted through the multifocal optical device, and wherein a two-dimensional light transmission profile associated to the filter is expressing a relative light transmission through the filter.

A relative light transmission is for example expressed as a percentage value, e.g. a light transmission having a value between 0% and 100%.

The optical device is further characterized in that the two-dimensional light transmission profile is specified with one or more one-dimensional light transmission curves, and wherein each one-dimensional light transmission curve is expressing a relative light transmission through the filter as function of a radial distance measured in a radial direction with respect to a filter reference axis, and wherein each of the one or more one-dimensional light transmission curves is defined either i) as a ring-shaped aperture transmission curve or alternatively ii) as an open-aperture transmission curve.

The ring-shaped aperture transmission curve comprises: a) a monotonically increasing portion going from a first light transmission value at a first radial distance to a second light transmission value at a second radial distance, and b) a monotonically decreasing portion going from a third light transmission value at a third radial distance to a fourth light transmission value at a fourth radial distance, and wherein $r_1 < r_2 \leq r_3 < r_4$, with $r_1, r_2, r_3, r_4$ being respectively the first, the second, the third and the fourth radial distance. Further, the light transmission in a region between the filter reference axis and the first radial distance is within a range: $0 \leq T_{r1-k}[r] \leq 1.2 \times T_1$, with $T_{r1-k}[r]$ corresponding to the transmission in a region between the first radial distance and the filter reference axis, and $T_1$ corresponding to the first transmission value.

The open-aperture transmission curve comprises: a monotonically decreasing portion going from a first light transmission value at a first radial distance to a second light transmission value at a second radial distance larger than the first radial distance, and wherein a light transmission in a region between the filter reference axis of the filter and the first radial distance is equal to the first light transmission value or is equal to the first light transmission value within 20%, preferably within 10%.

In this way, by either defining ring-shaped aperture transmission curves or open-aperture transmission curves as defined above, a light transmission profile is obtainable such that for each of the object distances within the extended depth of field, a point spread function associated to the object distance has an intensity of out-of-focus light rays at the image plane that is reduced when compared to an intensity of out-of-focus light rays without the filter.

According to method claim 1 and according to corresponding device claim 9 of the present invention each of the one or more one-dimensional light transmission curves is defined as a ring-shaped aperture transmission curve, $T_1/T_2 \leq 0.5$ and $T_4/T_3 \leq 0.5$ with $T_1, T_2, T_3$ and $T_4$ corresponding to respectively the first, second, third and fourth light transmission value.

In some embodiments having ring-shaped aperture transmission curves, the monotonically increasing portion and the monotonically decreasing portion are respectively a strictly monotonically increasing portion and a strictly monotonically decreasing portion.

In embodiments having ring-shaped aperture transmission curves, $(r_2-r_1)/(r_4-r_1) > 0.1$ and/or $(r_4-r_3)/(r_4-r_1) > 0.1$, preferably $(r_2-r_1)/(r_4-r_1) > 0.2$ and/or $(r_4-r_3)/(r_4-r_1) > 0.2$, more preferably $(r_3-r_1)/(r_4-r_1) > 0.3$ and/or $(r_4-r_3)/(r_4-r_1) > 0.3$.

In further embodiments having ring-shaped aperture transmission curves, $0 \leq T_1 /\max(T_2,T_3) < 0.5$ and $0 \leq T_4/\max(T_2,T_3) < 0.5$, and wherein $\max(T_2,T_3)$ is a function selecting the maximum value between $T_2$ and $T_3$.

In embodiments having open-aperture transmission curves, the transmission value at the optical axis k of the filter has a high transmission value. In these embodiments, The ratio $T_2/T_1$ is equal or smaller than 0.5, with $T_1$ and $T_2$ being respectively the first and second light transmission value.

In embodiments according to the invention, the two-dimensional light transmission profile is defined such that, for each object distance within the extended depth of field, a surface integral in the image plane of a normalized point spread function associated to the object distance is lower than a surface integral of a corresponding normalized point spread function obtained without filter. Hence, as the surface integral of the normalized PSF's obtained with the filter are lower than the surface integral of the normalized PSF's without filter, the intensity of the out-of-focus light rays at the image plane when using a filter are lower than without using a filter.

As mentioned, above, the normalized point spread functions used for comparison with and without using the filter, are to be construed as on-axis point spread functions.


**Short description of the drawings**

These and further aspects of the invention will be explained in greater detail by way of example and with reference to the accompanying drawings in which:

| | |
|---|---|
| Fig.1 | schematically illustrates the formation of point spread functions resulting from a multifocal optical device wherein an optical power is radially varying, |
| Fig.2 | illustrates point spread functions for an optical device comprising a radius-dependent multifocal device and an image of an object obtained without a filter for three different object distances within the EDOF and with and without image-processing, |
| Fig.3 | schematically illustrates the formation of point spread functions resulting from a radius-inde- |

pendent multifocal optical device,

Fig.4    illustrates point spread functions of an optical device comprising a multifocal device and an image of an object with a filter according to the invention for three different object distances within the EDOF and with and without image-processing,

Fig.5    illustrates an example of a PSF obtained with an optical device comprising a radius-dependent multifocal optical device with and without a filter according to the invention,

Fig.6    illustrates point spread functions for an optical device comprising a radius-independent multifocal device and without and with a filter according to the invention,

Fig.7    illustrates images obtained with an optical device comprising a radius-independent multifocal device, with and without filter and with and without image processing,

Fig.8    illustrates an example of a PSF obtained with an optical device comprising a radius-independent multifocal optical device with and without a filter according to the invention,

Fig.9    schematically illustrates an embodiment of an optical device according to the invention,

Fig.10a to Fig.10i    illustrate examples of light transmission profiles of a filter of an optical device according to the invention,

Fig.11a to Fig.11d    illustrate further examples of light transmission profiles of a filter of an optical device according to the invention,

Fig.12a and Fig.12b    show two embodiments of an optical device comprising a plano-concave lens for reducing astigmatism aberrations,

Fig.12c    shows an optical device comprising an axicon having a concave surface,

Fig.13    schematically illustrates an embodiment of an optical device wherein the imaging lens system comprises a first and a second lens group,

Fig.14    schematically illustrates the combination of a telescope lens with an embodiment of an optical device according to the present invention,

Fig.15a to Fig.15c    illustrate examples of the first and the fourth radial distances associated to a transmission profile of a filter according to the invention as observed in a filter plane $X_F$-$Y_F$.

The figures are not drawn to scale. Generally, identical components are denoted by the same reference numerals in the figures.

## Detailed description of embodiments

The present disclosure will be described in terms of specific embodiments, which are illustrative of the disclosure. The drawings described are only schematic.

Use of the verb "to comprise", as well as the respective conjugations, does not exclude the presence of elements other than those stated. Use of the article "a", "an" or "the" preceding an element does not exclude the presence of a plurality of such elements.

Furthermore, the terms first, second and the like in the description and in the claims, are used for distinguishing between similar elements and not necessarily for describing a sequence, either temporally, spatially, in ranking or in any other manner. It is to be understood that the terms so used are interchangeable under appropriate circumstances and that the embodiments of the disclosure described herein are capable of operation in other sequences than described or illustrated herein.

Reference throughout this specification to "one embodiment" or "an embodiment" means that a particular feature, structure or characteristic described in connection with the embodiments is included in one or more embodiment of the present disclosure. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to one ordinary skill in the art from this disclosure, in one or more embodiments.

According to a first aspect of the invention, a method for obtaining an image with an extended depth of field (EDOF) is provided. The method uses an optical device for imaging an object or an intermediate image of an object to an image plane. The optical device comprises an imaging lens system and a multifocal optical device for varying an optical power over a range of optical powers. The method further uses a filter for modulating an amplitude of light rays transmitted through the multifocal optical device.

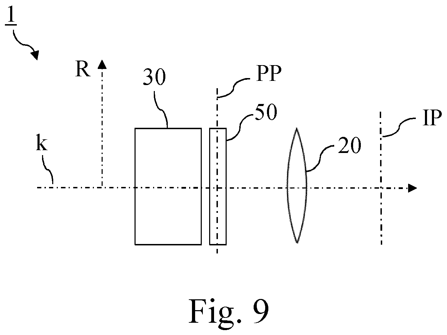

According to a second aspect of the invention an optical device 1, as schematically illustrated on Fig.9, for obtaining an image extended depth of field with an extended depth of field is provided, and wherein the optical device comprises an imaging lens system 20, a multifocal optical device 30 and a filter 50 configured for modulating an amplitude of light rays transmitted through the multifocal optical device 30.

An image with an extended depth of field (EDOF) has to be construed as an image having a depth of field that is larger than the depth of field (DOF) obtained with a single focus optical device wherein the DOF is limited by diffraction. Generally, the EDOF is obtained while maintaining a resolution within the EDOF that is the same as the resolution of the single focus optical device. As discussed above, the ratio between the EDOF and the diffraction limited DOF is named the extension ratio. The optical devices considered in the present disclosure are devices having an extension ratio of at least a factor 3, preferably at least a factor 5.

The point spread function of an optical device is to be construed as the response of the optical device to a point source or point object. The response of the point source can for example be observed in an image plane of the optical device. An optical device extending the depth of field by using a multifocal optical device, can be characterized by observing the point spread functions in the image plane resulting from point sources located at various object distance within the extended depth of field.

The concept of a point spread function used in the present disclosure for characterizing the optical device and making for example comparisons of PSF's with and without filter are to be construed as an on-axis point spread function concept, i.e. a PSF origination from a point source located on an optical axis of the optical device.

When a three-dimensional object or a scenery is imaged with an EDOF lens system or camera, the image in the image plane is composed of different PSF's being associated to different object distances.

Before describing detailed embodiments of the invention, the point spread functions, PSF's, obtained with an optical device comprising a multifocal optical device without the filter according to the invention, are first discussed. Indeed, the present inventions is, at least in part, based on the inventors observation and analysis of certain artefacts observed in prior art optical devices using a multifocal device.

*PSF's resulting from multifocal optical devices*

A first category of multifocal optical devices are radius-dependent multifocal devices having a focal length varying with a radius with respect to an optical axis of the multifocal optical device. In other words, the contribution of the focal length of the multifocal optical device to the overall optical power of the optical device, comprising the imaging lens system and the multifocal device, is varying with a radius of the multifocal device. An example of such a multifocal optical device of the first category is an axicon, such as a linear or a logarithmic axicon.

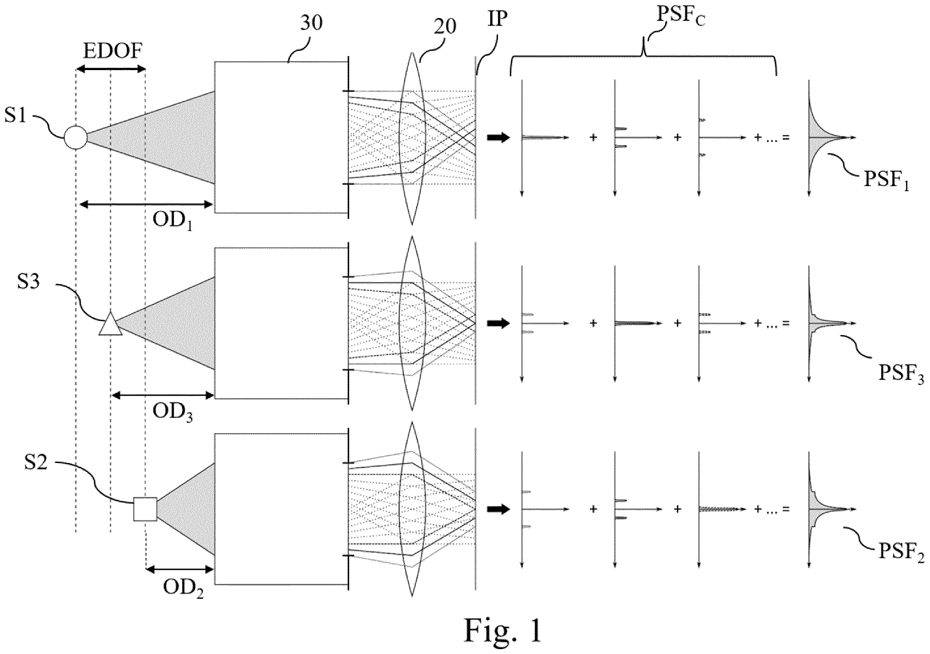

In Fig.1, three point spread functions $PSF_1$, $PSF_2$ and $PSF_3$ as observed in an image plane IP, are schematically shown for respectively three object distances $OD_1$, $OD_2$ and $OD_3$ within an EDOF of the optical device formed by an imaging lens system 20 and a multifocal optical device 30, and wherein the optical power varies with a radial distance to the optical axis. The first object distance $OD_1$ and the second object distance $OD_2$ define the extremities of the EDOF such that the EDOF is defined as a distance range equal to the difference between $OD_1$ and $OD_2$. In this illustrative example, the three object distances $OD_1$, $OD_2$ and $OD_3$ are shown to correspond to locations of respectively three point sources S1, S2 and S3. In the top panel of Fig.1, the point source S1 is located at the object distance $OD_1$ corresponding to a first extremity of the EDOF, while in the bottom panel, the point source S2 is located at the object distance $OD_2$ corresponding to a second extremity of the EDOF. The point source S3 is located in the middle of the EDOF at object distance $OD_3$.

As illustrated on Fig.1, the envelopes of the point spread functions $PSF_1$, $PSF_2$ and $PSF_3$ originating from different object distances are varying from object distance to object distance. This is resulting from the fact that for a given object distance $OD_i$, the resulting point spread function $PSF_i$ comprises various contributions $PSF_c$ as schematically illustrated on Fig.1, and these various contributions vary with the object distance. For example, for the top panel shown on Fig.1, the optical power of the multifocal optical device corresponding to the object distance $OD_1$ focusses light rays from a point source S1 at the image plane IP. However, as the multifocal optical device has other optical powers it will also focus light rays from the point source S1 to other focal planes parallel with the imaging plane. For a multifocal optical device wherein the optical power varies with a radial distance to the optical axis, every ring of light rays, at an aperture of the multifocal optical device, having a certain radius will be focussed to a different focal plane. In the top panel of Fig.1, light rays of an outer ring of an aperture at the multifocal optical device will be focussed in the image plane IP, while light rays from a ring with a smaller radius will be focussed to a focal plane located closer to the multifocal optical device. As a consequence, for a given object distance $OD_i$, the corresponding $PSF_i$ has contributions from both focussed light and from out-of-focus light and hence when imaging an object, the obtained image of the object in the image plane IP is blurred.

Therefore, in practice, the image obtained at the image plane when using a multifocal device is processed and a deconvolution, e.g. a known Wiener deconvolution, is performed taking into account a model point spread function such as for example an average point spread function $PSF_{av}$.

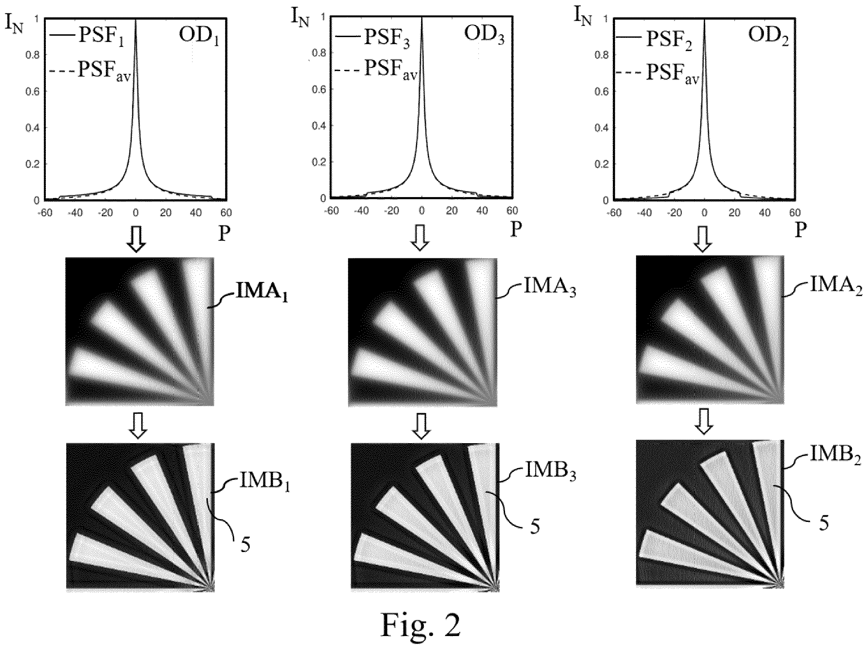

A problem with prior art optical devices is, however, that as a result of the model PSF or the average $PSF_{av}$ taken for performing the deconvolution, artefacts occur on the processed image. To illustrate these artefacts, PSF's of an optical device comprising a radius-dependent multifocal device are shown on the top panel of Fig.2. The PSF's shown on these figures are normalized PSF's, i.e. on the vertical axis a normalized intensity $I_N$ is plotted as function of a number of pixels P of a detector in the image plane. Hence, the maximum normalized intensity is equal to 1 for each of the PSF's shown. In Fig.2, three images $IMA_1$, $IMA_2$ and $IMA_3$ are taken with this optical device for an object being located at the three object distances $OD_1$, $OD_2$ and $OD_3$ corresponding to the two extremities and a centre position of the EDOF. In this example, the EDOF is equal to 1.2 mm. The object positioned at the three object distances is a so-called Siemens star, in this example having a size of $6.9 \times 6.9$ mm$^2$, which is a known object for verifying the resolution of optical devices. The three images $IMA_1$, $IMA_2$ and $IMA_3$ shown in Fig.2 are the raw images obtained in the image plane, i.e. images before processing with a deconvolution algorithm. Only a quarter of the imaged Siemens star is shown on Fig.2. The images $IMB_1$, $IMB_2$ and $IMB_3$ are the corresponding images obtained after deconvoluting the raw images with an average point spread function $PSF_{av}$, being the average of the point spread functions $PSF_i$ obtained at the object distances $OD_i$ within the EDOF. In this example, a resolution of 3.5 micrometer is obtained for each of the images. As shown in Fig.2, artefacts 5 occur on the processed images $IMB_1$, $IMB_2$ and $IMB_3$. The artefacts 5 are expressing a haze or shadow in the white triangles. The origin of these artefacts 5 results from the fact that the average point spread function $PSF_{av}$ does not represent or deviates too much from some of the individual point spread functions $PSF_i$ associated to a given object distance within the EDOF. As a consequence of the various contributions $PSF_c$ for forming an individual point spread function, sharp transitions can occur in the envelopes of these point spread functions. These sharp transitions are for example clearly visible in the point spread functions $PSF_2$ and $PSF_3$ on Fig.1. As a consequence, the average point spread function $PSF_{av}$ taken for the deconvolution cannot be accurate for all objects located in the extended depth of field.

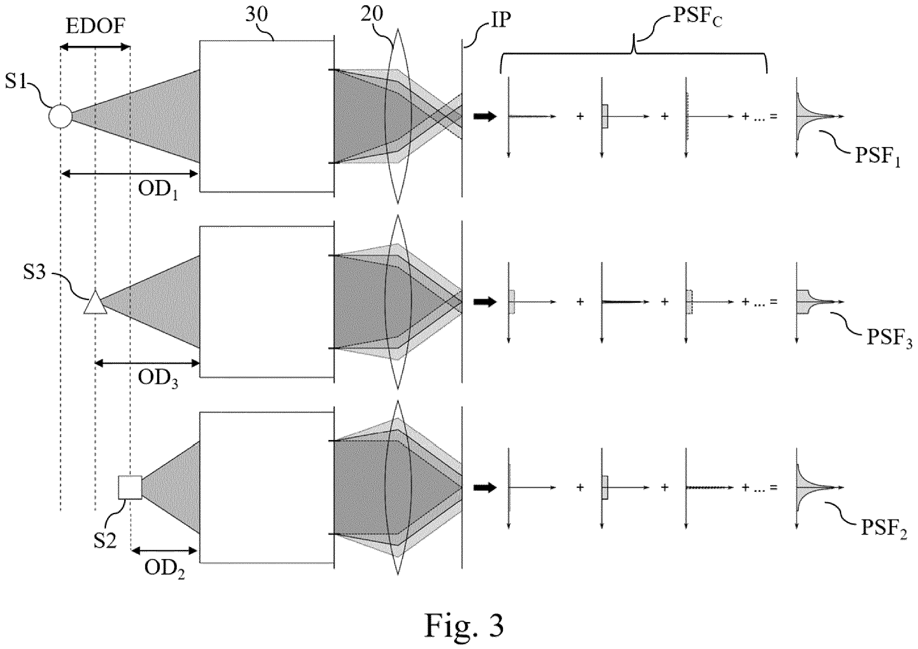

A similar problem occurs when the multifocal optical device is a multifocal optical device of a second category, namely radius-independent multifocal devices wherein the optical power is not varying with a radius to the optical axis. Examples of multifocal optical devices of this second category are a tunable acoustic gradient lens, known as a TAG-lens, a diffractive lens, a liquid lens or a lens with chromatic aberration. In Fig.3, three point spread functions $PSF_1$, $PSF_2$ and $PSF_3$, are schematically shown for respectively three object distances $OD_1$, $OD_2$ and $OD_3$ within an EDOF of the optical device comprising a multifocal optical device of the second category.

For these types of optical devices comprising for example a TAG lens, every ray at an aperture of the multifocal optical device is directed to each of the focal points of the optical device. Therefore, for a given object distance $OD_i$ within the EDOF, the formation of the point spread function $PSF_i$ on an image plane could be considered as a summation of PSF's that are created at the image plane by a conventional imaging lens when scanning a point object in and out of focus at both sides of the focal plane. As illustrated on Fig.3, point objects that are out of focus create a disk-shaped PSF contribution with a more or less uniform intensity that is inversely proportional to the area of the disk. As the point object approaches the focal plane of the imaging lens, the disk converges to a point contribution with radius limited by the diffraction limit.

As a result of the contribution of both in-focus and out-of-focus light to the point spread functions $PSF_i$, for example $PSF_1$, $PSF_2$ or $PSF_3$ shown on Fig.3, a high intensity at the centre of the PSF is observed and the intensity drops with increasing radius. Because the depth of field is finite, the intensity of the largest disk created by a point object at the border of the DOF has a finite positive value. Therefore, the PSF is cut off beyond a certain radius, which creates a sharp transition in the PSF. Moreover, the radial position of this transition varies as the point object is translated along the axial direction. The resulting effect is a PSF which varies over the depth of field.

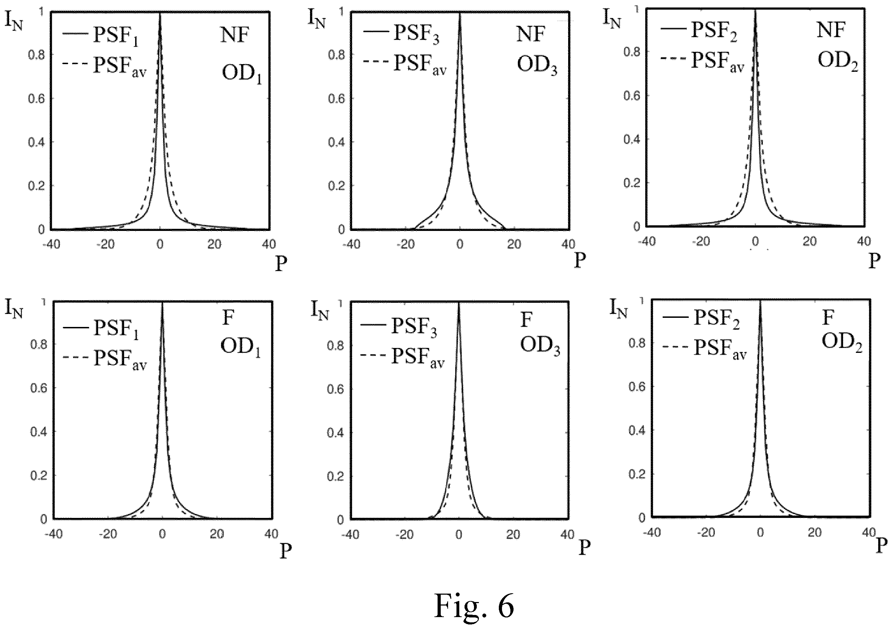

Further examples of point spread functions of an optical device comprising a radius-independent multifocal device are shown in Fig.6 were a normalized intensity is plotted as function of a pixel number. The upper and lower part of Fig.6 is illustrating PSF's obtained respectively without and with a filter according to the invention for various object distances $OD_1$, $OD_2$ and $OD_2$. These object distances correspond to object distances as shown on Fig.3. As illustrated in the top panels if Fig.6, if no filter is used, the shape of the point spread function is varying with the object distance and an average point spread function shown with a dotted line is not accurately representing each of the individual point spread functions.

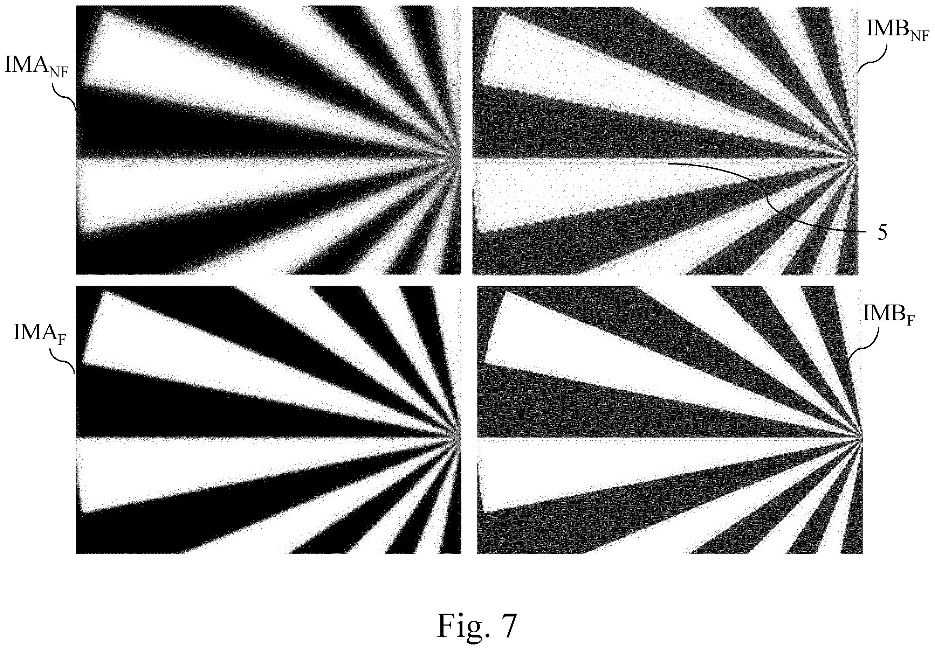

In Fig.7 images obtained with an optical device comprising a radius-independent multifocal device are shown. The two top images $IMA_{NF}$ and $IMB_{NF}$ are obtained without filter. The image $IMA_{NF}$ is the raw image without image processing and image $IMB_{NF}$ is obtained after deconvoluting image $IMA_{NF}$. On the image $IMB_{NF}$ artefacts 5 are observed resulting from the fact that the average PSF used for the deconvolution is not representative for all PSF's within the EDOF. The artefacts 5 in the image are visible in the white triangles where double contour lines are visible.

Hence, when either using a multifocal optical device of the first category such an axicon or using a multifocal optical of the second category such as TAG-lens, when deconvoluting the raw image created at the image plane of the optical device with an average $PSF_{av}$, artefacts are created due to the fact that no average point spread function can be found that represents each of the individual point spread functions corresponding to the various distances within the EDOF.

*Method, general*

According to the first aspect of the invention, a method is provided for obtaining an image with an extended depth of field. The extended depth of field is defined between a first object distance and a second object distance corresponding to extremities of the EDOF. The first object distance and second object distance defining the extremities of the EDOF are for example shown on Fig.1 and Fig.3 and indicated respectively with $OD_1$ and $OD_2$. The method comprises a step of using an optical device for imaging an object or an intermediate image of an object to an image plane IP. The optical device comprises at least an imaging lens system 20 and a multifocal optical device 30. The multifocal optical device 30 is used for varying an optical power within a range of optical powers. In this way, an image formed at the image plane corresponds to a sum of images obtained at different optical powers within the range of optical powers. The range of optical powers of the multifocal optical device is defined in relation to the extended depth of field required.

The method according to the invention is characterized in that it comprises a step of using a filter 50 for modulating an amplitude of light rays transmitted through the multifocal optical device 30. A two-dimensional light transmission profile is associated to the filter 50 and is expressing a relative light transmission through the filter.

The method is further characterized in that it comprises a step of specifying the two-dimensional light transmission profile with one or more one-dimensional light transmission curves T, and wherein each one-dimensional light transmission curve T is expressing a relative light transmission through the filter as function of a radial distance measured in a radial direction R with respect to a filter reference axis k. The method is further characterized by defining each of the one or more one-dimensional light transmission curves T either as a ring-shaped aperture transmission curve or, alternatively, defining each of the one or more one-dimensional light transmission curves T as an open-aperture transmission curve, such that for each object distance $OD_i$ within the extended depth of field range, a point spread function $PSF_i$ associated to the object distance $OD_i$ has an intensity of out-of-focus light rays at the image plane that is reduced when compared to an intensity of out-of-focus light rays without using the filter.

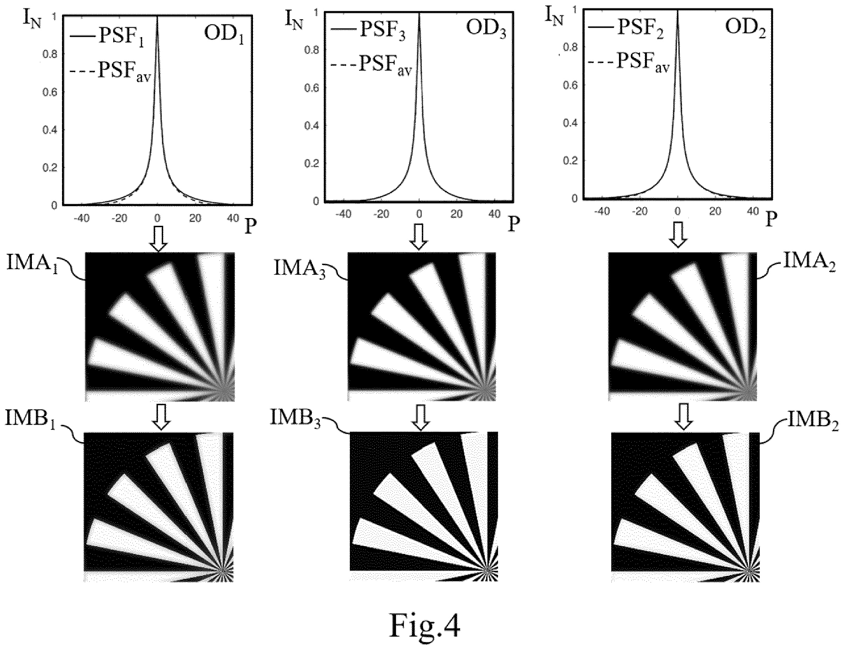

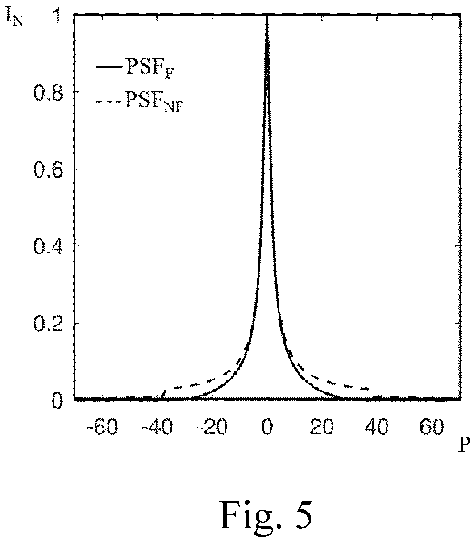

As a result of this reduction of out-of-focus light rays, the sharp transition in some of the envelopes of the individual point spread functions $PSF_i$ associated to a given object distance, e.g. $PSF_2$ and $PSF_3$ shown on Fig.1 and Fig.3, are strongly reduced and the variation of the envelopes between the different individual point spread functions $PSF_i$ is reduced. This is for example illustrated on Fig.5 where a point spread function without filter $PSF_{NF}$ is compared with a point spread function $PSF_F$ obtained with a filter, illustrating that the sharp transitions are strongly reduced when using the filter according to the invention and a more smoother and narrower curve is obtained. In this way, when defining a model point spread function, such as an average point spread function $PSF_{av}$, for making a deconvolution, the model point spread function is having an envelope that is representative for each of the individual point spread functions $PSF_i$ associated to each of the object distances within the EDOF. This is illustrated on Fig.4, showing the point spread functions $PSF_i$ obtained with an optical device according to the invention, i.e. using a filter as defined above and wherein the same Siemens star objects, as used in Fig.2, are imaged. The images obtained before processing are $IMA_1$, $IMA_2$ and $IMA_3$ and the images obtained after processing using a deconvolution algorithm and an average point spread function $PSF_{av}$ are the images referenced as $IMB_1$, $IMB_2$ and $IMB_3$. In contrast to the processed images shown on Fig.2, no artefacts are observed on the processed images shown on Fig.4. In fact, the raw images obtained in the image plane $IMA_1$, $IMA_2$ and $IMA_3$ before processing, are of a much higher quality in terms of contrast and resolution when compared to the images obtained when no filter is used, and in some cases, depending on the required contrast and resolution, the processing with a deconvolution algorithm is not absolutely necessary.

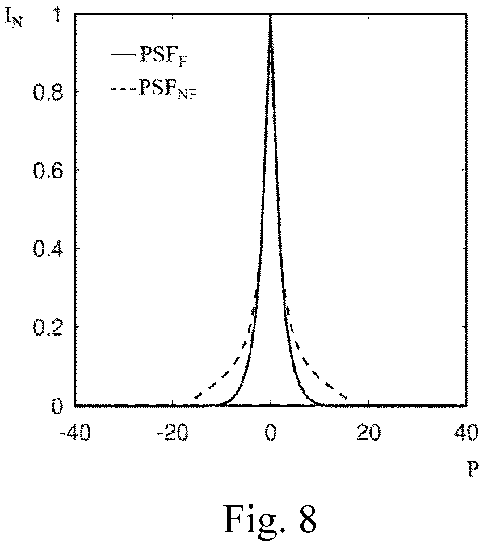

The examples of image obtained with a filter in Fig.4 are images obtained with an optical device comprising a radius-dependent multifocal device. The effect of reducing the artefacts described above by using a filter according to the invention is however also observed when using a radius-independent multifocal device. This is further illustrated on Fig.6 where in the lower panels, PSF's are shown when using a filter according to the invention. When using a filter, the PSF's are smoother and the variation over the object distance is reduced. The average PSF that is obtained for deconvoluting the raw images is shown as a dotted line and this average PSF obtained with a filter is a better representation of each the individual PSF's within the entire EDOF range. In Fig.8, a PSF with and without filter is shown in more detail, illustrating that with the filter, the PSF is narrower as the tails are reduced. These improved PSF's obtained when using a filter is reflected when imaging an object as illustrated in the lower panels of Fig.7. The two lower images $IMA_F$ and $IMB_F$ are obtained with a filter according to the invention. In the image $IMB_F$ obtained after deconvoluting image $IMA_F$, the artefacts observed in the image $IMB_{NF}$ are strongly reduced or eliminated.

The person skilled in the art will define the two-dimensional transmission profile by taking into account the category and type of multifocal optical device used. Indeed, as illustrated on Fig.1 and Fig.3, the envelopes of the point spread functions are depended on the category of multifocal optical device used.

As mentioned above, two-dimensional light transmission profile is generally specified with one or more one-dimensional light transmission curves T, wherein each one-dimensional light transmission curve T is expressing a relative light transmission through the filter as function of a radial distance measured in a radial direction R with respect to a filter reference axis k.

Various embodiments of filters and the associated transmission curves will be further discussed.

*Optical device for EDOF imaging*

According to the second aspect of the invention, an optical device is provided for obtaining an extended depth of field image. An example of such an optical device 1 is schematically shown on Fig.9. The optical device 1 comprises an imaging lens system 20 for imaging an object or an intermediate image of an object to an image plane IP. An imaging lens system has to be construed as any lens system that is suitable for receiving light rays from points of an object, a scenery or from an intermediate image of an object formed by another optical device and for conveying and focussing the received light rays to an image plane IP.

The optical device 1 further comprises a multifocal optical device 30 configured for varying an optical power of the optical device within a range of optical powers such that an image formed at the image plane corresponds to a summation of images obtained at different optical powers within the range of optical powers. The multifocal optical device 30 can be of the first or the second category of multifocal optical devices as discussed above.

The range of optical powers of the multifocal optical device is defined in relation to the extended depth of field range. Indeed, as known in the art, due to the range of optical powers that are increasing a depth of focus in the image plane, the depth of field on the object side is extended beyond the diffraction limited depth of field. Depending on the EDOF required, the person skilled in the art will determine what range of optical powers are required to cover the required EDOF.

The optical device according to the invention is characterized in that the optical device comprises a filter configured for modulating an amplitude of light rays transmitted through the multifocal optical device 30. A two-dimensional light transmission profile is associated to the filter and is specified with one or more one-dimensional light transmission curves T, and wherein each one-dimensional light transmission curve T is expressing a relative light transmission through the filter as function of a radial distance measured in a radial direction R with respect to a filter reference axis k. Each of the one or more one-dimensional light transmission curves T is either defined as a ring-shaped aperture transmission curve or, alternatively, as an open-aperture transmission.

The characteristics of the ring-shaped aperture transmission curve and the open-aperture transmission curve will be discussed in more detail below.

With these ring-shaped or open-aperture transmission curves, a two-dimensional light transmission profile can be obtained such that for each of the object distances within the extended depth of field range, an intensity of out-of-focus light rays at the image plane is reduced when compared to an intensity of out-of-focus light rays without a filter. In other words, the same filter is configured for reducing the out-of-focus light rays for each of the object distances within the extended depth of field.

The filter used in combination with the multifocal optical device has to be construed as a passive filter configured for modifying the various individual point spread functions $PSF_i$ associated to the object distances $OD_i$ within the EDOF. For example, the individual point spread functions $PSF_1$, $PSF_2$ and $PSF_3$ shown on Fig.1 and Fig.3 corresponding to respectively the three object distances $OD_1$, $OD_2$ and $OD_3$ will each of them be modified by the filter according to the invention. What transmission profiles need to be used for a given multifocal optical device and how point spread functions are being modified by the filter will be further discussed.

*Out-of-focus light rays*

Light rays from a point source are generally focussed to a point in the image plane or more precisely to an airy disk when taking into account the diffraction limitation. As discussed above and illustrated on Fig.1 and Fig.3, when however using an optical device comprising a multifocal optical device, the point spread function $PSF_i$ has various contributions from both in-focus light rays and out-of-focus light rays.

The intensity of the out-of-focus light rays has to be construed as an intensity per unit area in the image plane or an intensity per unit of solid angle. To determine if an intensity of out-of-focus light rays at the image plane is reduced when using a filter according to the invention, the normalized point spread functions with and without a filter according to the invention are to be compared.

The PSF is a two-dimensional intensity profile of light rays observed in the image plane expressing the intensity of light rays crossing the image plane. As mentioned above, the light rays originate from a point source and the optical device is receiving a cone of light rays from the point source. In embodiments, the light intensity is for example expressed in units of $W/m^2$ or in any other suitable unit.

The PSF's that are used to determine if the out-of-focus light rays of an optical device using a filter according to the invention are reduced when compared to not using the filter, have to be construed as on-axis PSF's, i.e. PSF's resulting from a point source located on the optical axis of the optical device.

As mentioned above, the light intensities of the PSF's can also be normalized. The normalized intensities of the PSF's are intensities that are normalized with respect to the centre point intensity at the centre of the PSF. This is illustrated for example on Fig.5 and Fig.8, where a normalized PSF intensity obtained in the image plane with and without a filter according to the invention is shown. The curves shown in Fig.5 and Fig.8 are cross-sections of the PSF.

The abscissa on Fig.5 and Fig.8 is a radial distance to the centre of the PSF, the centre being defined by the chief ray of the light cone. In this example the abscissa is expressed as a number of pixels, while the ordinate of Fig.5 and Fig.8 is the normalized intensity of the total light rays as detected at a given distance from the centre of the PSF. As discussed above, Fig.5 and Fig.8 represent an example of a PSF obtained with an optical device comprising respectively a radius-dependent and a radius independent multifocal optical device. As shown on both Fig.5 and Fig.8, when no filter is used, the tails of the PSF, shown with a dotted line, have a higher normalized intensity when compared to the PSF obtained with a filter, shown with a full line. The fact that the tails of the dotted line, i.e. the PSF without filter, have a higher normalized intensity value than the full line, i.e. the PSF with filter, expresses that the out-of-focus light when using a filter is reduced when compared to not using a filter. In other words, the ratio between the intensity in the centre of the PSF and the intensity in the tails of the PSF is higher when using a filter then without a filter.

To compare PSF's to determine if the out-of-focus light rays are reduced, either calculated or measured PSF's can be used.

To determine if the intensity of the out-of-focus light rays at the image plane are reduced when using a filter compared to not using a filter, the normalized PSF's obtained with and without a filter can be plotted on a same graph, as for example done in Fig.5 and Fig.8. One can then determine a difference between the two curves to evaluate if the out-of-focus light rays are reduced. If the curve of the normalized PSF obtained with a filter, i.e. the full line in the example on Fig.5 and Fig.8, is below the curve of the normalized PSF obtained without a filter, i.e. the dotted line the example on Fig.5 and Fig.8, then it is concluded that the out-of-focus light rays are reduced. If the curve obtained with filter is not entirely below the curve obtained without filter, for example if extremities of the tails or some portions of the tails of the curve obtained with the filter are above the curve obtained without filter, a more precise comparison needs to be performed by performing an integral calculation, discussed below. Also if the PSF intensity profile in the image plane would not be axial symmetric, a more precise comparison based on the integral calculation described below is to be made.

To make such a more precise comparison of intensities of out-of-focus light rays, an integral of the normalized PSF's obtained with and without filter can be determined for a number of PSF's within the EDOF and the corresponding PSF's can be compared. If the integral of the normalized PSF intensity values in the image plane obtained with a filter is smaller than the integral of the corresponding normalized PSF intensities obtained without filter, then it is concluded that the out-of-focus light rays are reduced. Such an integral of the PSF has to be construed as a surface integral in the image plane of the observed normalized light intensities. When assuming an axial-symmetric normalized point spread function PSF(r) the integral can be expressed as: $\int_{r=0}^{\infty} 2 \times \pi \times r \times \text{PSF}(r)\,dr$ , with r being a radial distance to the optical axis. Alternatively, if the normalized PSF is not fully axial-symmetric, the integral can also be expressed as a surface integral within the image plane equal to $\iint PSF\,(x,y)dxdy,$ with x and y being the coordinates of a first X and a second axis Y of a coordinate system of the image plane.

To demonstrate that the reduction of the out-of-focus light is obtained for each of the object distances within the EDOF, the comparison can be performed for a number of PSF's having object distances within the EDOF. The comparison can for example be done for three object distances, the two extremity object distances defining the EDOF and one object distance in the middle of the EDOF.

As will be further discussed below, the two-dimensional light transmission profile is generally specified with one or more one-dimensional light transmission curves T. In these embodiments, the method to define the two-dimensional light transmission profile comprises steps of iteratively varying one or more parameters of the one or more one-dimensional light transmission curves T specifying the two-dimensional light transmission profile. And, for a plurality of object distances within the extended depth of field, the method comprises further steps of, determining with and without filter an intensity profile in the image plane of a point spread function associated to the object distance, comparing the determined intensity profiles of the point spread functions obtained with and without filter, from the comparison determining if an intensity of out-of-focus light rays when using the filter is reduced when compared to an intensity of out-of-focus light rays without using the filter.

*Filter and filter manufacturing*

In embodiments, the filter is a so-called neutral density filter. Various manufacturers provide custom made filters having a required transmission profile. The filter is for example made by adding a thin layer of low-reflective chrome on top of a glass substrate. The transmission profile is then created by selectively etching the chrome layer such that the local optical density of the chrome layer corresponds to the desired transmission ratio.

In embodiments, the filter can be composed of multiple filter elements wherein each filter element is contributing to the formation of the light transmission profile.

In other embodiments, the filter is formed by two polarizing elements and the combined use of these two polarizing elements allows to define a required two-dimensional light transmission profile that, as discussed above, allows for each object distance $OD_i$ within the extended depth of field, reduce an intensity of out-of-focus light rays at the image plane IP when compared to an intensity of out-of-focus light rays without using the filter.

In optical devices comprising such polarizing elements, a first polarizing element is positioned at a pupil plane of the optical device and varies the polarization angle $\vartheta$ of the incident rays between 0° and 180°, in which the angle $\vartheta$ depends on the radial distance R with respect to the reference axis k. A second polarizing element is positioned between the first polarizing element and the image plane IP of the optical device, where for example an image sensor is placed. The second polarizing element comprises a linear polarizer at a polarization angle $\alpha$. The second element transmits the incoming rays depending on the polarization direction $\vartheta$ of the incoming rays and the polarization direction $\alpha$ of the second element. In embodiments, the resulting transmission of light rays can be expressed according to the equation: $T = \cos(\vartheta - \alpha)^2$. The polarization angles $\vartheta$ and $\alpha$ for both elements are defined such that the required transmission profile is obtained.

In alternative embodiments having a filter formed by two polarizing elements, the first element is positioned at a pupil plane of the optical device and the second element is placed between the first element and the object. The equation of transmission remains the same, yet the first element now reduces the intensity of the rays. Also with this embodiment, by adequately defining the polarization angles for both elements the required transmission profile is obtained.

*Multifocal optical devices*

The invention is not limited to a specific multifocal optical device for extending a depth of field beyond the refraction limited depth of field. As discussed above, two major categories can be distinguished.

In embodiments, the multifocal device is configured such that the first and the second object distance defining the extremities of the EDOF are corresponding to respectively a first and a second optical power of the optical device. The range of optical powers of the optical device are then defined such that optical powers between the first and the second optical power are forming a sub-range of the range of optical powers of the multifocal device. In other words, the range of optical powers of the optical device is broader than the range of optical powers needed to cover the EDOF.

The first category of multifocal devices involves the use of a radius-dependent multifocal optical device wherein the optical power varies with a radius with respect to the optical axis of the multifocal device. For example, in Zhai et al., referenced above, an axicon is disclosed for extended depth of field imaging. In patent US7593161B2, a lens axicon is disclosed that is made of one or more lenses that are adapted with a phase plate to generate a predetermined amount of spherical aberration. These axicon type of multifocal optical devices are suitable for the optical device according to the present invention wherein a dedicated filter is combined with the multifocal optical device to modify the point spread functions for each of the object distances within the EDOF.

The first category of multifocal optical devices is to be used with a filter having a ring-shaped aperture transmission profile, as will be further discussed below in more detail.

In embodiments, a first and a second radius of the radius-dependent multifocal optical device 30 are associated to respectively the first and the second optical power of the multifocal device. In other words, a first focal length of the multifocal device at the first radius and a second focal length of the multifocal device at the second radius is contributing to respectively the first and second optical power of the optical device formed by the imaging lens system and the multifocal device. Hence, the multifocal device is configured such that the optical device formed by the combination of the imaging lens system and the multifocal optical device covers the optical power sub-range range associated to the EDOF, i.e. the optical power sub-range between the first and the second optical power.

In embodiments where the optical power between the first and the second optical power, i.e. the optical power associated to the EDOF is a sub-range of the overall optical power of the optical device, the multifocal optical device comprises a third and a fourth radius such that the third radius is smaller than the first radius and the fourth radius is larger than the second radius. This third and fourth radius of the multifocal device are then associated to the extremity optical powers defining the overall range of optical powers of the optical device.

With the second category of multifocal optical devices, i.e. radius-independent multifocal devices, no variation of the optical power with radius occurs. An example of such a multifocal optical device is a TAG-lens as discussed in US10101572B2.

Generally, the multifocal optical device has an associated optical axis and in the embodiment shown on Fig.9, the optical axis of the multifocal optical device 30 coincides with the optical axis k of the filter 50 and also coincides with the optical axis of the imaging lens system 20. In other embodiments involving for example mirrors, the optical axis of the multifocal optical device does not necessarily coincide with the optical axis of the filter 50.

The person skilled in the art will define the shape of the multifocal optical device, e.g. when designing an axicon, as function of the imaging requirements in terms of the extension ratio required for the EDOF and the required resolution.

Considering for example an optical device requiring an optical resolution of 3.5 $\mu$m and a magnification of a factor of two for an object at a distance of 50 mm from a first lens group of the imaging lens system, and using a 2/3" camera sensor at the image plane IP of the optical device. The DOF for such a configuration when using a normal camera system would be 60 $\mu$m. By using however a camera system according to the invention with a multifocal optical device such as for example a linear axicon having a cone angle of 0.5° and an aperture stop with a diameter of 7.0 mm located at the apex of the linear axicon, a DOF extension ratio of 10 is reached, while maintaining the required resolution over the DOF.

*Ring-shaped aperture transmission curves*

As mentioned above, the two-dimensional light transmission profile is generally specified with one or more one-dimensional light transmission curves T. If the two-dimensional light transmission profile filter is axial-symmetric, a single one-dimensional light transmission curve T is specifying the transmission through the filter.

The one-dimensional light transmission curve T associated to the filter 50 can be fully specified by expressing a transmission value as function of a radial distance measured in a radial direction R with respect to the filter reference axis k associated to the filter 50. The value of the light transmission can be a relative light transmission value, for example expressed as percentage value between 0% and 100%. A zero transmission value corresponds to fully blocking the light.

The light transmission curve T is determined by for example calculating the point spread functions as function of an object distance within the extended depth of field for the optical device, with and without a filter, and by varying parameters of the transmission curve of the filter and iteratively recalculating the PSFs until a single optimum transmission curve is obtained reducing the out-of-focus light for each of the object distances within the EDOF. The basic shapes and associated parameters of the transmission curves suitable for the filter are discussed here below and the detailed parameters are determined taking into account the specific type of multifocal optical device and the imaging properties of the imaging lens system and the EDOF of the optical device.

A first type of light transmission curves are ring-shaped aperture transmission curves. A ring-shaped aperture transmission curve is to be construed as a transmission curve wherein either a central region around the optical axis of the filter has a zero light transmission, i.e. light is blocked or wherein a central region around the optical axis has a transmission value that is much lower than a maximum transmission value at a given radius, e.g. equal or less than 20% of the maximum transmission value such that a ring-shaped aperture transmission curve is formed.

The ring-shaped aperture transmission curve is a curve to be used with a multifocal optical device of the first category of multifocal optical devices discussed above. In some embodiments, the ring-shaped aperture can also be used in combination with a multifocal optical device of the second category.

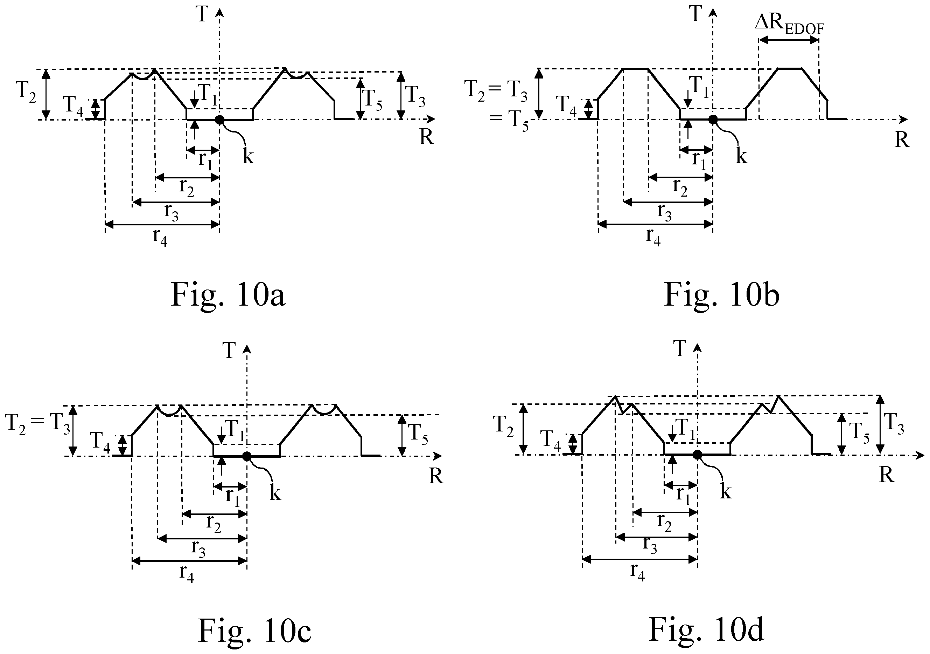

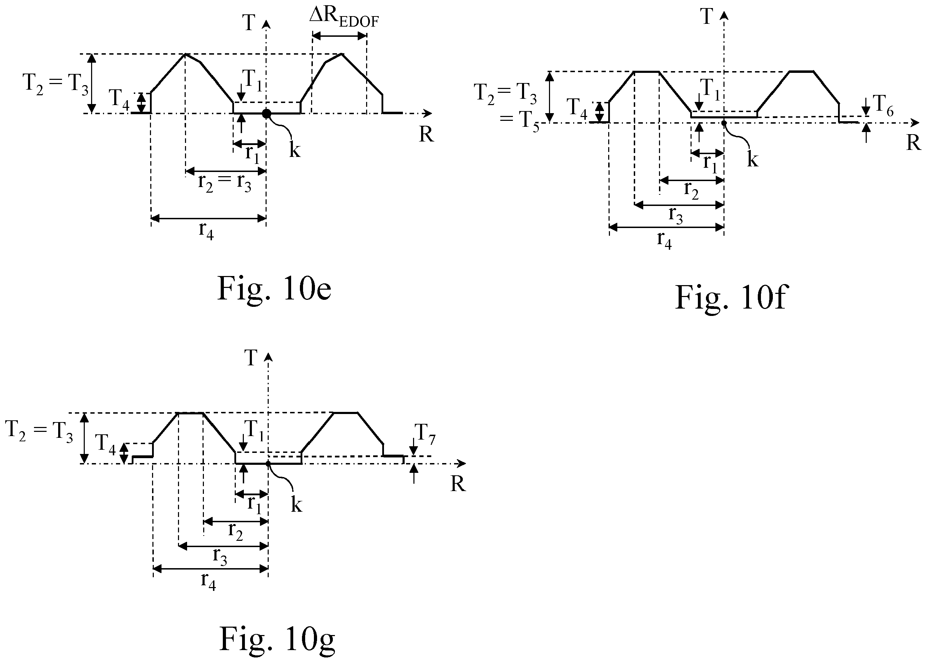

Various examples of ring-shaped transmission curves are shown in Fig.10a to Fig.10i. As illustrated on all these figures, the light transmission curve T comprises a monotonically increasing portion going from a first light transmission value $T_1$ at a first radial distance $r_1$ to a second light transmission value $T_2$ at a second radial distance $r_2$, and a monotonically decreasing portion going from a third light transmission value $T_3$ at a third radial distance $r_3$ to a fourth light transmission value $T_4$ at a fourth radial distance $r_4$. In these embodiments, $r_1 < r_2 \leq r_3 < r_4$, with $r_1$, $r_2$, $r_3$, $r_4$ being respectively the first, the second, the third and the fourth radial distance.

In embodiments having ring-shaped transmission curves, $T_1/T_2 \leq 0.5$ and $T_4/T_3 \leq 0.5$ with $T_1$, $T_2$, $T_3$ and $T_4$ corresponding to respectively the first, second, third and fourth light transmission value.

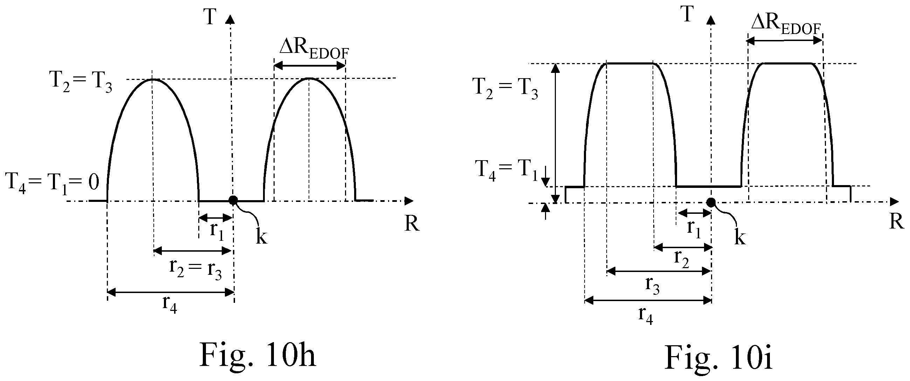

In embodiments comprising a radius-dependent multifocal device, the first, second, third and fourth radial distances of the light transmission curve are defined such that light rays intercepting or exiting the multifocal optical device at the first radius are intercepting the filter between the first $r_1$ and the second $r_2$ radial distance and light rays intercepting or exiting the multifocal optical device 30 at the second radius are intercepting the filter between the third $r_3$ and fourth $r_4$ radial distance. The first and second radius of the multifocal device are the radii associated to the first and second optical power defining the sub-range of optical powers, as defined above. In Fig.10b, Fig.10e, Fig.10h and Fig.10i, a delta range of radial distances indicated by $\Delta R_{EDOF}$ corresponds to the filter radial distances that are intercepted by light rays contributing to the EDOF.

In the embodiments shown on Fig.10a to Fig.10i, the high transmission value is either equal to $T_2$ or to $T_3$, obtained at radius $r_2$ and $r_3$, respectively. In embodiments as shown on Fig.10b, Fig.10c and Fig.10e to Fig.10i, the values $T_2$ or to $T_3$ are equal.

The monotonically increasing portion and the monotonically decreasing portion of the light transmission curve is not necessary a linearly increasing or linearly decreasing portion with radial distance. Indeed, the transitions from the first to the second radial distance and the transitions from the third to the fourth radial distance can also have a smoother, non-linear curve as illustrated for example in Fig.10h and Fig.10i.

In the embodiments shown on Fig.10a to Fig.10i, the monotonically increasing portion and the monotonically decreasing portion are respectively a strictly monotonically increasing portion and a strictly monotonically decreasing portion. However, in other embodiments, the monotonically increasing portion and the monotonically decreasing portion are not necessarily strictly monotonically increasing portion or strictly monotonically decreasing. For example, the increasing portion from $r_1$ to $r_2$ and the decreasing portion from $r_3$ to $r_4$ can be performed gradually in small steps.

In embodiments according to the present disclosure, the light transmission in a central region between the optical axis k of the filter and the first radial distance $r_1$ is within the following range: $0 \leq T_{r1\text{-}k}[r] \leq 1.2 \times T_1$, with $T_{r1\text{-}k}[r]$ corresponding to the light transmission in a region between the first radial distance and the optical axis of the filter.

In some embodiments, as for example shown on Fig.10a to Fig.10e, the light transmission in the entire central region between the optical axis k of the filter and the first radial distance $r_1$ is zero. This central obscuration or strong reduction of light rays originating from the centre region around the optical axis, eliminates background light being spread over the entire image plane IP and which is not contributing to the image formation, e.g. light rays from out of the EDOF region. The central obscuration or strong reduction of the light transmission allows for obtaining a higher resolution and a higher contrast.

In embodiments, wherein $r_2 < r_3$, the light transmission in a region between the second and the third radial distance is either constant, i.e. with $T_2 = T_3$, or the light transmission in this region is only varying with a small amount. An example of a range is : $0.8 \times (T_2 + T_3)/2 \leq T_{r2\text{-}r3}[r] \leq 1.2 \times (T_2 + T_3)/2$, with $T_{r2\text{-}r3}[r]$ corresponding to the light transmission in the region between the second and the third radial distance. In other embodiments, light transmission in the region between the second and the third radial distance is in the following range: $0.9 \times (T_2 + T_3)/2 \leq T_{r2\text{-}r3}[r] \leq 1.1 \times (T_2 + T_3)/2$.

In embodiments, the radial width between $r_2$ and $r_1$ and the radial width between $r_4$ and $r_3$ are optimized and these widths have optimal values determined in the following range: $(r_2 - r_1)/(r_4 - r_1) > 0.1$ and/or $(r_4 - r_3)/(r_4 - r_1) > 0.1$. These widths are optimized in relation to the shape of the PSF's obtained for various object distances within the EDOF when no filter is used. In other embodiments, the radial width between $r_2$ and $r_1$ and the radial width between $r_4$ and $r_3$ have values in the range: $(r_2 - r_1)/(r_4 - r_1) > 0.2$ and/or $(r_4 - r_3)/(r_4 - r_1) > 0.2$. In further embodiments these widths can be larger such that: $(r_2 - r_1)/(r_4 - r_1) > 0.3$ and/or $(r_4 - r_3)/(r_4 - r_1) > 0.3$.

In embodiments, the transmission values of $T_1$ and $T_4$ are optimized with respect to the transmission values of $T_2$ and $T_3$ and the transmission values are determined such that $0 \leq T_1/\max(T_2,T_3) < 0.5$ and/or $0 \leq T_4/\max(T_2,T_3) < 0.5$, with $\max(T_2,T_3)$ being a function selecting between the maximum value between $T_2$ and $T_3$. In other embodiments, $0 \leq T_1/\max(T_2,T_3) \leq 0.3$ and/or $0 \leq T_4/\max(T_2,T_3) \leq 0.3$.

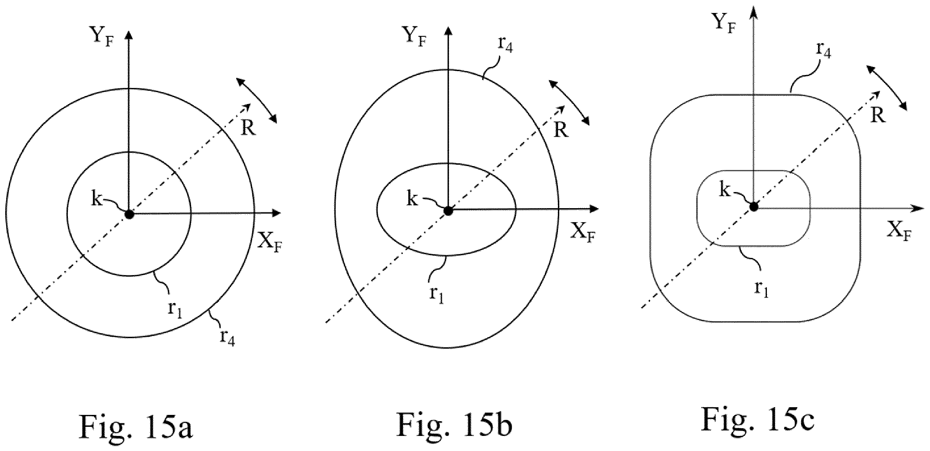

In embodiments, the two-dimensional light transmission profile is axial-symmetric. This is illustrated in Fig.15a, where the radial distance $r_1$ and $r_4$, being a radial distance with respect to the reference axis k, are plotted as observed in a filter plane $X_F$-$Y_F$, the filter plane being orthogonal to the reference axis k associated to the filter. In these embodiments, for each cross-section of the light transmission profile with a plane comprising the reference axis k, the radial distances $r_1$ and $r_4$ remain the same. In other embodiments, as illustrated on Fig.15b and Fig.15c, the light transmission curve is not axial symmetric and the values $r_1$ and $r_4$ as observed in the filter plane $X_F$-$Y_F$ can vary. For these embodiments, more than one one-dimensional light transmission curve T is to be specified for a number of radial directions to express the entire two-dimensional light transmission curve.

*Open-aperture transmission curves*

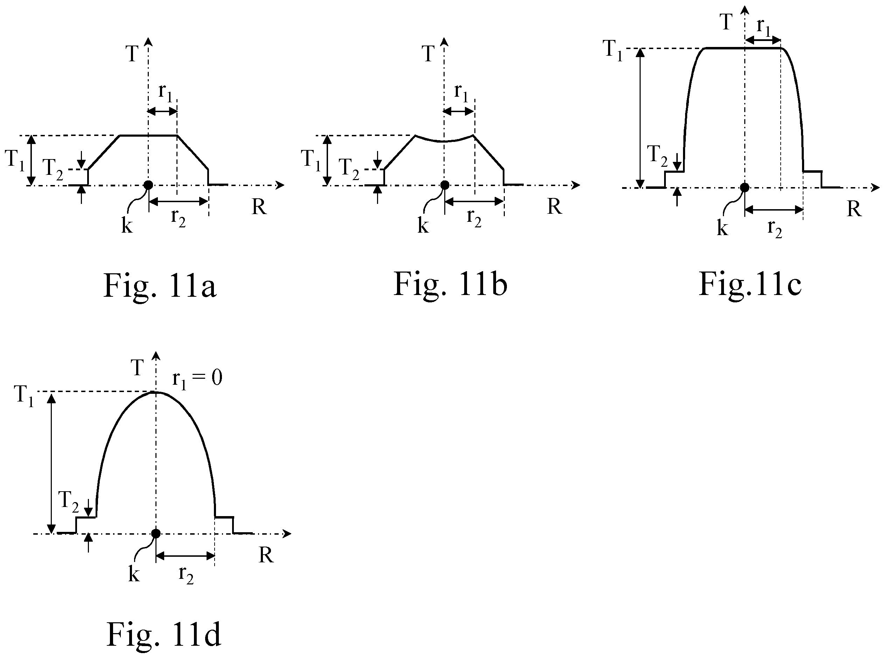

An open-aperture transmission curve is to be construed as a transmission curve wherein the transmission value at the optical axis k of the filter has a high transmission value. Examples of such curves are shown on Fig.11a to Fig.11d. The open-aperture transmission curve is preferably used in combination with the second category of multifocal optical devices discussed above, e.g. for use with a TAG-lens.

In each of the embodiments shown on Fig.11a to Fig.11d, the light transmission curve T comprises a monotonically decreasing portion going from a first light transmission value $T_1$ at a first radial distance $r_1$ to a second light transmission value $T_2$ at a second radial distance $r_2$ larger than the first radial distance $r_1$. The light transmission in a region between the optical axis k of the filter 50 and the first radial distance $r_1$ is for example equal to the first light transmission value $T_1$ as illustrated on Fig.11a and Fig.11c. In other embodiments, the light transmission in the region between the optical axis k and the radial distance $r_1$ is not necessarily constant and a small variation is possible, as illustrated on Fig.11b.

In embodiments, in this region between the optical axis k of the filter 50 and the first radial distance $r_1$, the light transmission is for example equal to the first light transmission value $T_1$ within 20%, preferably within 10%. In the embodiment shown on Fig.11d, the first radial distance is zero and the first light transmission value corresponds to the light transmission value observed on the optical axis k of the filter.

In embodiment, the first and second radial distance are optimized such that $0.2 < (r_2-r_1)/r_2 \leq 1$, preferably $0.4 < (r_2-r_1)/r_2 \leq 1$, more preferably $0.6 < (r_2-r_1)/r_2 \leq 1$.

To optimize the reduction of the out-of-focus light in the image plane, the transmission values $T_1$ and $T_2$ are further optimized such that $0 \leq (T_2/T_1) < 0.5$, preferably $0 \leq (T_2/T_1) < 0.3$, more preferably $0 \leq (T_2/T_1) < 0.1$.

*Imaging lens system*

As mentioned above, the imaging lens system of the optical device of the present disclosure has to be construed as any lens system that is suitable for receiving light rays from points of an object or from an intermediate image of an object and for focussing the received light rays to an image plane IP. More specifically, the imaging lens system is receiving cones of light rays from points of an object or a scene and the imaging lens system then conveys and focusses these cones of light rays on the image sensor where an inversed image of the object or scene is formed. What cones of light rays being accepted by the lens system is determined by the pupil of the lens system.

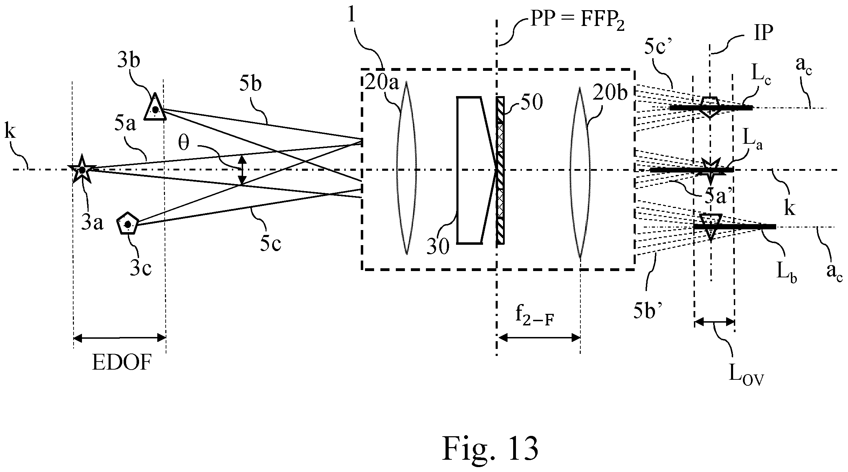

In embodiments, as schematically illustrated on Fig.13, the imaging lens system comprises a first lens group 20a configured for receiving cones 5a,5b,5c of light rays from points of the object 3a,3b,3c or of the intermediate image of an object and for conveying the cones 5a,5b,5c to the multifocal optical device 30. A second lens group 20b is configured for, for each of the cones 5a,5b,5c of light rays conveyed to the multifocal optical device 30, receiving transmitted light rays 5a',5b',5c' transmitted through the multifocal optical device 30, and focussing the transmitted light rays 5a',5b,5c' to the image plane IP for forming the image of the object.

In embodiments, as illustrated on Fig.13, the second lens group 20b comprises a front focal plane $FFP_2$ coinciding with a pupil plane PP so as to form an image telecentric lens system. In other words, the filter is placed at a distance equal to the front focal distance $f_{2-f}$ from the second lens group. Advantageously, when using an image telecentric lens, whatever the object distance within the EDOF is, there is no variation in the magnification of the object imaged.

In embodiments, the first lens group 20a and a part of the multifocal optical device 30 are configured for forming a combined focal plane CFP that is coinciding with the pupil plane PP where the filter is placed. In this way, an object telecentric lens is formed.

With the optical device according to the invention comprising a multifocal optical device, each of the point objects 3a, 3b,3c schematically shown on Fig.13 are focussed on corresponding line segments $L_a$, $L_b$ and $L_c$ that are essentially parallel with the optical axis k, in case of an image telecentric setup as discussed above. As schematically illustrated on Fig.13, those three line segments $L_a$, $L_b$ and $L_c$ are located at a different position with respect to the imaging plane IP. An object that is positioned further away from the first lens group within the extended depth of field, such as point object 3a, results in a line segment that is located closer to the second lens group than the resulting line segment of an object that is located closer to the first lens group, such as point object 3b. Hence, taking two objects that are each located at one end of the depth of field, such as for example objects 3a and 3b in Fig.13, results in two line segments that partially overlap. The image plane IP, where for example a sensor of a camera can be placed, is preferably located in the middle of this overlapping region.

For each of the line segments, the start-point of the line segment is defined by the position of the focal point closest to the second lens group that still leads to a satisfactory resolution. This resolution is determined by analysis of the PSF on a dedicated software platform, or by analytical equations. The end-point of the line segment is defined in a similar fashion by determining the position of the focal point with satisfactory resolution that is located furthest from the second lens group.

*Location of the filter*

In embodiments, the filter of the optical device according to the invention is preferably coinciding with a pupil plane or adjacent to a pupil plane of the imaging lens system.

As known in the art, each imaging lens system comprises at least one pupil plane that is perpendicular to an optical axis of the lens system and is defining a location along the optical axis wherein a real pupil or an imaged pupil is formed. An example of a pupil plane is the plane wherein an aperture stop is placed. An aperture stop is for example a ring-shaped element or a diaphragm that is forming an opening defining an acceptance cone angle for a cone of light rays having a cone axis that coincides with the optical axis of the imaging lens system. The opening formed by the aperture stop is generally named a defining pupil or a real pupil.

Depending on the specific embodiment of the imaging lens system and the location of the aperture stop with respect to the lenses of the lens system, the aperture stop can be imaged along the lens system at one or more positions along the optical axis to form imaged pupils and hence form additional pupil planes. For example, an aperture stop can be placed at the entrance of the lens system and be imaged at a pupil plane of the lens system located along the optical axis.

In optics, a pupil plane is generally defined as a plane wherein the so-called chief rays of the image-forming cones of light are crossing on the optical axis. The chief rays can be considered as corresponding to the central ray of the image-forming light cones. In other words, at the pupil planes, all the image-forming cones, i.e. light cones accepted by the lens system, have a common conic section when crossing a pupil plane.

Hence the imaging lens system of the optical device according to the invention comprises at least a pupil plane PP crossing, as illustrated on Fig.9, or adjacent to the filter 50. As mentioned above, the pupil plane is defining a location along the optical axis of the filter wherein a pupil is formed. The pupil plane where the filter 50 is placed can either be a pupil plane upstream or downstream of the multifocal device.

In embodiments, the filter 50 is forming an aperture stop defining the pupil at the pupil plane PP. In other words, the outer radial distance in the transmission curve T where the transmission value becomes zero, defines the inner radial boundary of the aperture stop.

When using a multifocal device, a pupil plane is generally adjacent or crossing the multifocal device. In embodiments wherein an axicon is used as a multifocal device, the pupil plane can cross for example the optical axis of the multifocal device at the apex of the axicon. The filter 50 can then be positioned at the same pupil plane crossing the apex of the axicon. In other embodiments, the filter can be placed at another pupil plane upstream or downstream of the axicon.

In an embodiment wherein a TAG-lens is used as a multifocal device, the filter 50 is also to be positioned in a pupil plane. For example for the embodiment of an optical device comprising a TAG lens shown on Fig.3 of patent document US10101572B2, the filter 50 can for example be placed at a pupil plane existing between the objective lens and the TAG-lens.

In embodiments wherein the filter 50 comprises multiple filter elements contributing to the two-dimensional transmission profile of the filter, a first filter element can for example be located at a first pupil plane and a second filter element can be located at a second pupil plane.

*Optical device with means for reducing astigmatism*

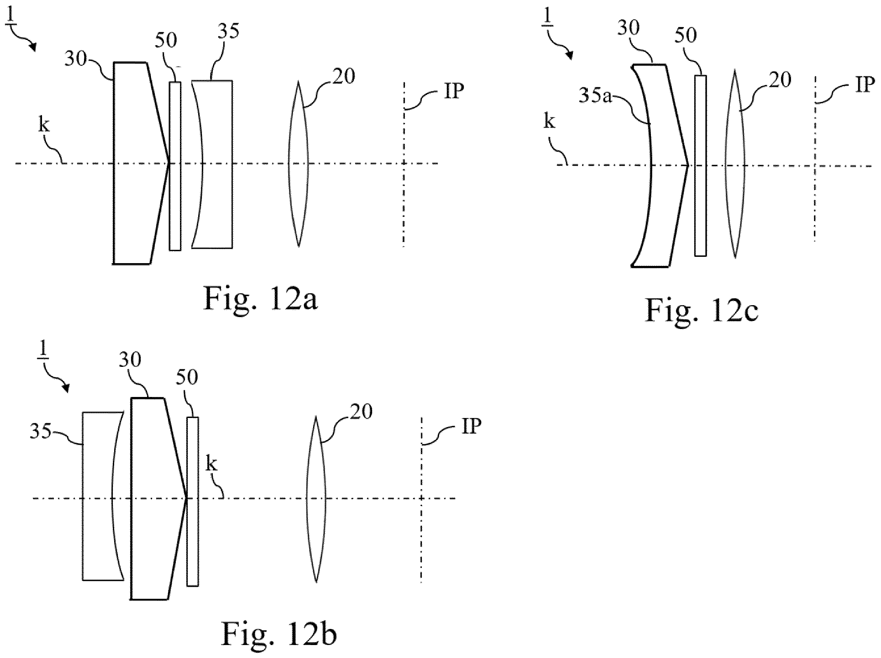

In some embodiments, the optical device 1 according to the invention comprises means for additionally reducing astigmatism, which is an aberration resulting from the use of the multifocal optical device 30. In embodiments, the optical device 1 comprises a plano-concave lens 35 located upstream or downstream from the multifocal optical device 30, as schematically illustrated on Fig.12a and Fig.12b. In embodiments, the optical device can comprise multiple plano-concave lenses, for example a first and second plano-concave lens positioned respectively upstream and downstream of the multifocal device. In other embodiments, wherein the multifocal optical device comprises an axicon, the axicon comprises a surface 35a having a plano-concave shape as for example illustrated on Fig.12c.

In some embodiments, the filter 50 can be attached to the plano-concave lens 35.

*Applications*

The optical device according the invention is especially suited for use with a camera system. Such a camera system comprises besides the optical device according to the invention, an image sensor configured such that the image plane IP of the imaging lens system 20 is coinciding with a detection plane of the image sensor. The camera further comprises an image processing unit comprising a deconvolution algorithm for processing an image acquired on the detection plane and for outputting a deconvoluted image.

In embodiments, the image processing unit comprises data, e.g. stored in a memory of the processing unit, representing a model point spread function. In embodiments, the processing unit is configured for generating a mathematical equation representing a model point spread function. The mathematical equation can for example make use of the data associated to the model point spread function. In embodiments, the average model point spread function used by the processing unit for performing the deconvolution corresponds to an average of different point spread functions $PSF_i$ associated to different object distances $OD_i$ within the extended depth of field.

The image sensor of the camera system according to the invention typically comprises a CCD or a CMOS device known in the art. The sensor pixels of the CCD or CMOS device are preferably arranged as a two-dimensional array. Alternatively, depending on the particular application of the camera, a one-dimensional array could be used as well.

The imaging processing unit of the camera typically comprises a data processor and a memory for storing a software program and the data representing the point spread function. Preferably, the imaging processing unit also comprises a display, such as an LCD display or any other type of display, for visualizing the image obtained after deconvolution.

With the camera system according to the invention, the point spread function can be approximated by a single mathematical equation. Indeed, with the camera system according to the invention, the PSF needed to perform a deconvolution of the image obtained in the image plane are the same independent the object distance within the EDOF. In this way the mathematical approach to obtain the deconvoluted image is simplified and the speed of calculation is increased.

In some embodiments, by optimizing the transmission curve of the filter, the image obtained in the image plane has sufficient resolution and contrast and does not need to be deconvoluted.

The optical device according to the invention can advantageously be coupled to for example a telescope or a microscope. In these embodiments, the telescope or microscope are generating an intermediate optical image that is then further imaged with the imaging lens system of the optical device according to the present invention to form an image on the image plane. In these embodiments, the optical device according to the invention can be considered as an extension module to be coupled to an existing optical instrument such as a telescope or a microscope.

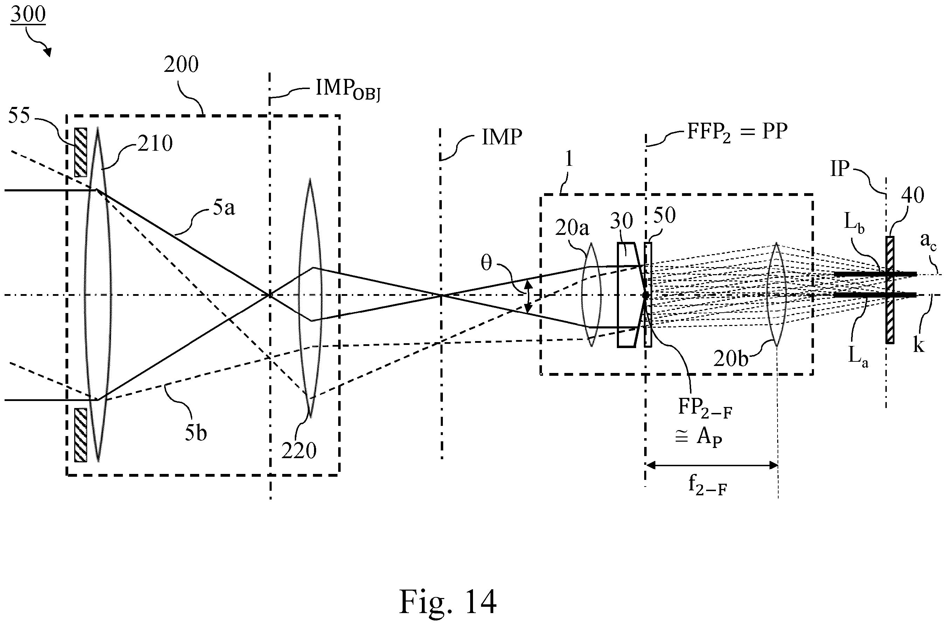

An example of telescope system 300 comprising a telescope lens group 200 and an optical device according to the invention is schematically illustrated on Fig.14. In this example, the telescope lens group 200 comprises an objective lens 210 having an objective image plane $IMP_{OBJ}$ and an intermediate lens 220 forming an intermediate image at an image plane IMP. This intermediate image is then further imaged through the lens system 20a,20b of the optical device according to the invention to form a resulting image in an image plane IP. In the example shown on Fig.14, an image sensor 40 is located at the image plane IP for acquiring the resulting image. Many alternative embodiments can be realized. For example, the intermediate lens 220 can be a lens that replaces the eye piece of the telescope or it can be an additional lens in addition to the eye piece of the telescope and be configured to create, in combination with the eye piece, an intermediate image at the image plane IMP. In the example shown on Fig.14, the telescope lens group 200 comprises an aperture stop 55 at the entrance of the telescope defining the entrance pupil of the telescope. Hence, in this example, there is no need to put a dedicated aperture stop in the optical device according to the invention, only the filter 50 with a filter transmission profile as discussed above is to be installed. In this example, the pupil formed in the pupil plane PP of optical device 1 according to the invention corresponds to an image of the aperture of the aperture stop 55 of the telescope lens group 200. In these embodiments the dimension of the filter and the transmission profile of the filter is configured in correspondence with the image of the aperture stop of the telescope.

## Claims

1. A method for obtaining an image with an extended depth of field extending between a first object distance and a second object distance, said method comprising:

    • using an optical device (1) for imaging an object or an intermediate image of an object to an image plane (IP), and wherein the optical device (1) comprises an imaging lens system (20) and a multifocal optical device (30),
    • using the multifocal optical device (30) for varying an optical power of the optical device (1) within a range of optical powers such that an image formed at the image plane (IP) corresponds to a summation of images obtained at different optical powers, and wherein said range of optical powers is defined in relation to said extended depth of field,

    **characterized in that** said method further comprises:

    • modulating an amplitude of light rays transmitted through the multifocal optical device (30) by using a filter (50), and wherein a two-dimensional light transmission profile associated to the filter (50) is expressing a relative light transmission through the filter,
    • specifying said two-dimensional light transmission profile with one or more one-dimensional light transmission curves (T), and wherein each one-dimensional light transmission curve (T) is expressing a relative light transmission through the filter as function of a radial distance measured in a radial direction (R) with respect to a filter reference axis (k) of the filter, and defining each of said one or more one-dimensional light transmission curves (T) as a ring-shaped aperture transmission curve, such that for each object distance ($OD_i$) within said extended depth of field, a point spread function ($PSF_i$) associated to the object distance ($OD_i$) has an intensity of out-of-focus light rays at the image plane (IP) that is reduced when compared to an intensity of out-of-focus light rays without using the filter, and
    • defining each curve to comprise

        a) a monotonically increasing portion going from a first light transmission value ($T_1$) at a first radial distance ($r_1$) to a second light transmission value ($T_2$) at a second radial distance ($r_2$),
        b) a monotonically decreasing portion going from a third light transmission value ($T_3$) at a third radial distance ($r_3$) to a fourth light transmission value ($T_4$) at a fourth radial distance ($r_4$), and wherein $r_1 < r_2 \le r_3 < r_4$, with $r_1, r_2, r_3, r_4$ being respectively said first, said second, said third and said fourth radial distance,

    wherein the light transmission in a region between the filter reference axis (k) and the first radial distance ($r_1$) is within a range: $0 \le T_{r1-k}[r] \le 1.2 \times T_1$, with $T_{r1-k}[r]$ corresponding to said transmission in a region between the first radial distance ($r_1$) and the filter reference axis (k), and $T_1$ corresponding to said first transmission value, and wherein $T_1/T_2 \le 0.5$ and $T_4/T_3 \le 0.5$ with $T_2$, $T_3$ and $T_4$ corresponding to respectively said second, third and fourth light transmission value.

2. A method according to claim 1 wherein said first, second, third and fourth radial distances are determined such that: $(r_2-r_1)/(r_4-r_1) > 0.1$ and/or $(r_4-r_3)/(r_4-r_1) > 0.1$, and/or wherein said first, second and third light transmission value are determined such that: $0 \leq T_1/max(T_2,T_3) < 0.5$ and $0 \leq T_4/max(T_2,T_3) < 0.5$, whereby $max(T_2,T_3)$ is a function selecting the maximum value between $T_2$ and $T_3$.

3. A method according to claim 1 or claim 2 wherein said first, second and third light transmission value are determined such that $0 \leq T_1/max(T_2,T_3) < 0.5$ and $0 \leq T_4/max(T_2,T_3) < 0.5$, whereby $max(T_2,T_3)$ is a function selecting the maximum value between $T_2$ and $T_3$.

4. A method according to anyone of claims 1 to 3 wherein said first and said second object distance are corresponding to respectively a first and a second optical power of the optical device, and wherein the method comprises

   • defining said range of optical powers such that optical powers between said first and said second optical power are forming a sub-range of said range of optical powers.

5. A method according to claim 4 wherein the multifocal optical device (30) is a radius-dependent multifocal optical device having a focal length varying with a radius with respect to an optical axis of the multifocal optical device, and wherein a first focal length of the multifocal device at a first radius and a second focal length of the multifocal device at a second radius are contributing to respectively said first and said second optical power of the optical device, and wherein the first radius is smaller than the second radius.

6. A method according to claim 5 further comprising

   • defining said first, second, third and fourth radial distances of the one or more one-dimensional light transmission curves (T) such that light rays intercepting or exiting said multifocal optical device (30) at said first radius are intercepting said filter (50) between the first ($r_1$) and the second ($r_2$) radial distance and light rays intercepting or exiting said multifocal optical device (30) at said second radius are intercepting the filter between the third ($r_3$) and fourth ($r_4$) radial distance.

7. A method according to any of previous claims wherein said multifocal optical device comprises an axicon such as a linear axicon or a logarithmic axicon.

8. A method according to anyone of previous claims wherein said optical device has an extension ratio of at least a factor 3, and wherein said extension ratio is defined as the ratio between said extended depth of field and a diffraction limited depth of field obtained with an imaging lens system without multifocal optical device but with a same optical resolution as the optical device having the extended depth of field.

9. An optical device (1) for imaging an object or an intermediate image of an object to an image plane (IP) and for obtaining an image having an extended depth of field between a first object distance and a second object distance, the optical device comprising

   • an imaging lens system (20),
   • a multifocal optical device (30) configured for varying an optical power of the optical device (1) within a range of optical powers such that an image formed at the image plane corresponds to a summation of images obtained at different optical powers, and wherein said range of optical powers is defined in relation to said extended depth of field,
   **characterized in that** said optical device (1) comprises

   • a filter (50) configured for modulating an amplitude of light rays transmitted through the multifocal optical device (30), and wherein a two-dimensional light transmission profile associated to the filter is expressing a relative light transmission through the filter,

   **and in that** said two-dimensional light transmission profile is specified with one or more one-dimensional light transmission curves (T), and wherein each one-dimensional light transmission curve (T) is expressing a relative light transmission through the filter as function of a radial distance measured in a radial direction (R) with respect to a filter reference axis (k), and wherein each of said one or more one-dimensional light transmission curves (T) is defined

as a ring-shaped aperture transmission curve comprising

a) a monotonically increasing portion going from a first light transmission value ($T_1$) at a first radial distance ($r_1$) to a second light transmission value ($T_2$) at a second radial distance ($r_2$),
b) a monotonically decreasing portion going from a third light transmission value ($T_3$) at a third radial distance ($r_3$) to a fourth light transmission value ($T_4$) at a fourth radial distance ($r_4$), and wherein $r_1 < r_2 \leq r_3 < r_4$, with $r_1$, $r_2$, $r_3$, $r_4$ being respectively said first, said second, said third and said fourth radial distance,
wherein the light transmission in a region between the filter reference axis (k) and the first radial distance ($r_1$) is within a range: $0 \leq T_{r1\text{-}k}[r] \leq 1.2 \times T_1$, with $T_{r1\text{-}k}[r]$ corresponding to said transmission in a region between the first radial distance ($r_1$) and the filter reference axis (k), and $T_1$ corresponding to said first transmission value, and wherein $T_1/T_2 \leq 0.5$ and $T_4/T_3 \leq 0.5$ with $T_2$, $T_3$ and $T_4$ corresponding to respectively said second, third and fourth light transmission value.

10. An optical device according to claim 9 wherein $r_2 < r_3$ and wherein a light transmission in a region between the second and the third radial distance is within a range:
$0.8 \times (T_2 + T_3)/2 \leq T_{r2\text{-}r3}[r] \leq 1.2 \times (T_2 + T_3)/2$, with $T_{r2\text{-}r3}[r]$ corresponding to said light transmission in a region between the second and the third radial distance.

11. An optical device according to claim 9 or claim 10 wherein:
$(r_2\text{-}r_1)/(r_4\text{-}r_1) > 0.1$ and/or $(r_4\text{-}r_3)/(r_4\text{-}r_1) > 0.1$; and/or wherein:
$0 \leq T_1/\max(T_2,T_3) < 0.5$ and $0 \leq T_4/\max(T_2,T_3) < 0.5$, whereby $\max(T_2,T_3)$ is a function selecting the maximum value between $T_2$ and $T_3$.

12. An optical device according to anyone of claims 9 to 11 wherein said first and said second object distance are corresponding to respectively a first and a second optical power of the optical device, and wherein optical powers between said first and said second optical power are forming a sub-range of optical powers of said range of optical powers,

wherein the multifocal optical device (30) is a radius-dependent multifocal optical device having a focal length varying with a radius with respect to an optical axis of the multifocal optical device,
and wherein a first focal length of the multifocal device at a first radius and a second focal length of the multifocal device at a second radius are contributing to respectively said first and said second optical power of the optical device, and with said first radius being smaller than said second radius, and
wherein said first, second, third and fourth radial distances of the one or more one-dimensional light transmission curves (T) are defined such that light rays intercepting or exiting said multifocal optical device (30) at said first radius are intercepting said filter between the first ($r_1$) and the second ($r_2$) radial distance and light rays intercepting or exiting said multifocal optical device (30) at said second radius are intercepting the filter between the third ($r_3$) and the fourth ($r_4$) radial distance.

13. An optical device according to anyone of claims 9 to 12 wherein the multifocal optical device comprises an axicon such as a linear axicon or a logarithmic axicon, the optical device comprising means for reducing astigmatism aberrations generated by the multifocal optical device (30), and wherein said means comprising a plano-concave lens (35) or said multifocal optical device (30) comprises a surface having a plano-concave shape.

14. A camera system comprising

• an optical device (1) according to anyone of claims 9 to 13,
• an image sensor configured such that a detection plane of the image sensor is coinciding with the image plane (IP) of the imaging lens system (20),
• an image processing unit comprising a deconvolution algorithm for processing an image acquired on said detection plane of the image sensor and for outputting a deconvoluted image, and wherein said image processing unit comprises data expressing a model point spread function and/or wherein the processing unit is configured for generating a mathematical equation expressing a model point spread function, and wherein said model point spread function is representative for each of the different point spread functions ($PSF_i$) associated to the different object distances ($OD_i$) within the extended depth of field.

**15.** A microscope assembly comprising

• a microscope configured for forming an intermediate image of an object,
• an optical device according to anyone of claims 9 to 13 coupled with said microscope for imaging said intermediate image through the imaging lens system (20) and to form an image on said image plane (IP).

**Patentansprüche**

**1.** Verfahren zum Erhalten eines Bildes mit einer erweiterten Schärfentiefe, die sich zwischen einem ersten Objektabstand und einem zweiten Objektabstand erstreckt, wobei das Verfahren Folgendes umfasst:

• Verwenden einer optischen Vorrichtung (1) zum Abbilden eines Objekts oder eines Zwischenbildes eines Objekts auf eine Bildebene (IP, Engl. Image Plane), und wobei die optische Vorrichtung (1) ein Abbildungslinsensystem (20) und eine multifokale optische Vorrichtung (30) umfasst,
• Verwenden der multifokalen optischen Vorrichtung (30) zum Variieren einer optischen Leistung der optischen Vorrichtung (1) innerhalb eines Bereichs von optischen Leistungen, so dass ein Bild, das in der Bildebene (IP) ausgebildet wurde, einer Summierung von Bildern entspricht, die bei unterschiedlichen optischen Leistungen erhalten wurden, und wobei der Bereich von optischen Leistungen in Bezug auf die erweiterte Schärfentiefe definiert ist,

**dadurch gekennzeichnet, dass** das Verfahren ferner Folgendes umfasst:

• Modulieren einer Amplitude von Lichtstrahlen, die durch die multifokale optische Vorrichtung (30) unter Verwendung eines Filters (50) übertragen werden, und wobei ein zweidimensionales Lichttransmissionsprofil, das dem Filter (50) zugeordnet ist, eine relative Lichttransmission durch den Filter ausdrückt,
• Spezifizieren des zweidimensionalen Lichttransmissionsprofils mit einer oder mehreren eindimensionalen Lichttransmissionskurven (T), und wobei jede eindimensionale Lichttransmissionskurve (T) eine relative Lichttransmission durch den Filter als Funktion eines radialen Abstands ausdrückt, der in einer radialen Richtung (R) in Bezug auf eine Filterreferenzachse (k) des Filters gemessen wird, und Definieren jeder der einen oder mehreren eindimensionalen Lichttransmissionskurven (T) als ringförmige Aperturtransmissionskurve, so dass für jeden Objektabstand $(OD_i)$ innerhalb der erweiterten Schärfentiefe eine Punktspreizfunktion (PSF$_i$), die dem Objektabstand $(OD_i)$ zugeordnet ist, eine Intensität von unscharfen Lichtstrahlen an der Bildebene (IP) aufweist, die im Vergleich zu einer Intensität von unscharfen Lichtstrahlen ohne Verwendung des Filters reduziert ist, und
• Definieren jeder Kurve, die Folgendes umfasst

a) einen monoton ansteigenden Abschnitt, der von einem ersten Lichttransmissionswert $(T_1)$ in einem ersten radialen Abstand $(r_1)$ zu einem zweiten Lichttransmissionswert $(T_2)$ in einem zweiten radialen Abstand $(r_2)$ übergeht,
b) ein monoton abnehmender Abschnitt, der von einem dritten Lichttransmissionswert $(T_3)$ in einem dritten radialen Abstand $(r_3)$ zu einem vierten Lichttransmissionswert $(T_4)$ in einem vierten radialen Abstand $(r_4)$ übergeht, und wobei $r_1 < r_2 \leq r_3 < r_4$ mit $r_1, r_2, r_3, r_4$ als jeweils der erste, der zweite, der dritte und der vierte radiale Abstand,

wobei die Lichttransmission in einem Bereich zwischen der Filterreferenzachse (k) und dem ersten radialen Abstand $(r_1)$ innerhalb eines folgenden Bereichs liegt: $0 \leq T_{r1-k}[r] \leq 1{,}2 \times T_1$, wobei $T_{r1-k}[r]$ der Transmission in einem Bereich zwischen dem ersten radialen Abstand $(r_1)$ und der Filterreferenzachse (k) entspricht und $T_1$ dem ersten Transmissionswert entspricht,
und wobei $T_1/T_2 \leq 0{,}5$ und $T_4/T_3 \leq 0{,}5$ mit $T_2$, $T_3$ und $T_4$, die jeweils dem zweiten, dritten und vierten Lichttransmissionswert entsprechen.

**2.** Verfahren nach Anspruch 1, wobei der erste, zweite, dritte und vierte radiale Abstand so bestimmt wird, dass: $(r_2-r_1) / (r_4-r_1) > 0{,}1$ und/oder $(r_4-r_3) / (r_4-r_1) > 0{,}1$, und/oder wobei der erste, zweite und dritte Lichttransmissionswert so bestimmt wird, dass: $0 \leq T_1/\max(T_2,T_3) < 0{,}5$ und $0 \leq T_4/\max(T_2,T_3) < 0{,}5$, wobei $\max(T_2,T_3)$ eine Funktion ist, die den maximalen Wert zwischen $T_2$ und $T_3$ auswählt.

**3.** Verfahren nach Anspruch 1 oder Anspruch 2, wobei der erste, zweite und dritte Lichttransmissionswert so bestimmt

wird, dass

$0 \leq T_1/\max(T_2,T_3) < 0,5$ und $0 \leq T_4/\max(T_2,T_3) < 0,5$, wobei $\max(T_2,T_3)$ eine Funktion ist, die den maximalen Wert zwischen $T_2$ und $T_3$ auswählt.

4. Verfahren nach einem der Ansprüche 1 bis 3, wobei der erste und der zweite Objektabstand jeweils einer ersten und einer zweiten optischen Leistung der optischen Vorrichtung entsprechen, und wobei das Verfahren folgendes umfasst

• Definieren des Bereichs von optischen Leistungen, so dass die optischen Leistungen zwischen der ersten und der zweiten optischen Leistung einen Teilbereich des Bereichs der optischen Leistungen ausbilden.

5. Verfahren nach Anspruch 4, wobei die multifokale optische Vorrichtung (30) eine radiusabhängige multifokale optische Vorrichtung mit einer Brennweite ist, die mit einem Radius in Bezug auf eine optische Achse der multifokalen optischen Vorrichtung variiert, und wobei eine erste Brennweite der multifokalen Vorrichtung bei einem ersten Radius und eine zweite Brennweite der multifokalen Vorrichtung bei einem zweiten Radius zu jeweils der ersten und der zweiten optischen Leistung der optischen Vorrichtung beitragen, und wobei der erste Radius kleiner als der zweite Radius ist.

6. Verfahren nach Anspruch 5, ferner umfassend

• Definieren der ersten, zweiten, dritten und vierten radialen Abstände der einen oder der mehreren eindimensionalen Lichttransmissionskurven (T), so dass Lichtstrahlen, die die multifokale optische Vorrichtung (30) an dem ersten Radius durchdringen oder austreten, den Filter (50) zwischen dem ersten ($r_1$) und dem zweiten ($r_2$) radialen Abstand durchdringen und Lichtstrahlen, die die multifokale optische Vorrichtung (30) an dem zweiten Radius durchdringen oder austreten, den Filter zwischen dem dritten ($r_3$) und vierten ($r_4$) radialen Abstand durchdringen.

7. Verfahren nach einem der vorhergehenden Ansprüche, wobei die multifokale optische Vorrichtung ein Axikon, wie etwa ein lineares Axikon oder ein logarithmisches Axikon, umfasst.

8. Verfahren nach einem der vorhergehenden Ansprüche, wobei die optische Vorrichtung ein Verlängerungsverhältnis von mindestens einem Faktor 3 aufweist, und wobei das Verlängerungsverhältnis als das Verhältnis zwischen der erweiterten Schärfentiefe und einer beugungsbegrenzten Schärfentiefe definiert ist, die mit einem Abbildungslinsensystem ohne multifokale optische Vorrichtung, aber mit der gleichen optischen Auflösung wie die optische Vorrichtung, mit der erweiterten Schärfentiefe erhalten wird.

9. Optische Vorrichtung (1) zum Abbilden eines Objekts oder eines Zwischenbildes eines Objekts auf eine Bildebene (IP) und zum Erhalten eines Bildes mit einer erweiterten Schärfentiefe zwischen einem ersten Objektabstand und einem zweiten Objektabstand, die optische Vorrichtung umfassend

• ein Abbildungslinsensystem (20),
• eine multifokale optische Vorrichtung (30), die so konfiguriert ist, dass sie eine optische Leistung der optischen Vorrichtung (1) innerhalb eines Bereichs von optischen Leistungen variiert, so dass ein Bild, das in der Bildebene ausgebildet wurde, einer Summierung von Bildern entspricht, die bei unterschiedlichen optischen Leistungen erhalten wurden, und wobei der Bereich von optischen Leistungen in Bezug auf die erweiterte Schärfentiefe definiert ist,
**dadurch gekennzeichnet, dass** die optische Vorrichtung (1) Folgendes umfasst

• einen Filter (50), der so konfiguriert ist, dass er eine Amplitude von Lichtstrahlen moduliert, die durch die multifokale optische Vorrichtung (30) übertragen werden, und wobei ein zweidimensionales Lichttransmissionsprofil, das dem Filter zugeordnet ist, eine relative Lichttransmission durch den Filter ausdrückt,

**und dass** das zweidimensionale Lichttransmissionsprofil mit einer oder mehreren eindimensionalen Lichttransmissionskurven (T) spezifiziert ist, und wobei jede eindimensionale Lichttransmissionskurve (T) eine relative Lichttransmission durch den Filter als Funktion eines radialen Abstands, gemessen in einer radialen Richtung (R) in Bezug auf eine Filterreferenzachse (k), ausdrückt, und wobei jede der einen oder mehreren eindimensionalen Lichttransmissionskurven (T) als eine ringförmige Aperturtransmissionskurve definiert ist, umfassend

a) einen monoton ansteigenden Abschnitt, der von einem ersten Lichttransmissionswert ($T_1$) in einem ersten radialen Abstand ($r_1$) zu einem zweiten Lichttransmissionswert ($T_2$) in einem zweiten radialen Abstand ($r_2$) übergeht,

b) einen monoton abnehmenden Abschnitt, der von einem dritten Lichttransmissionswert ($T_3$) in einem dritten radialen Abstand ($r_3$) zu einem vierten Lichttransmissionswert ($T_4$) in einem vierten radialen Abstand ($r_4$) übergeht, und wobei $r_1 < r_2 \leq r_3 < r_4$ mit $r_1$, $r_2$, $r_3$, $r_4$ als jeweils der erste, der zweite, der dritte und der vierte radiale Abstand,

wobei die Lichttransmission in einem Bereich zwischen der Filterreferenzachse (k) und dem ersten radialen Abstand ($r_1$) innerhalb eines folgenden Bereichs liegt:

$0 \leq T_{r1\text{-}k}[r] \leq 1,2 \times T_1$, wobei $T_{r1\text{-}k}[r]$ der Transmission in einem Bereich zwischen dem ersten radialen Abstand ($r_1$) und der Filterreferenzachse (k) entspricht und $T_1$ dem ersten Transmissionswert entspricht, und wobei $T_1/T_2 \leq 0,5$ und $T_4/T_3 \leq 0,5$ mit $T_2$, $T_3$ und $T_4$, die jeweils dem zweiten, dritten und vierten Lichttransmissionswert entsprechen.

10. Optische Vorrichtung nach Anspruch 9, wobei $r_2 < r_3$ und wobei eine Lichttransmission in einem Bereich zwischen dem zweiten und dem dritten radialen Abstand innerhalb eines folgenden Bereichs liegt:

$0,8 \times (T_2 + T_3)/2 \leq T_{r2\text{-}r3}[r] \leq 1,2 \times (T_2 + T_3)/2$, wobei $T_{r2\text{-}r3}[r]$ der Lichttransmission in einem Bereich zwischen dem zweiten und dem dritten radialen Abstand entspricht.

11. Optische Vorrichtung nach Anspruch 9 oder Anspruch 10, wobei
($r_2$-$r_1$) / ($r_4$-$r_1$) > 0, 1 und/oder ($r_4$-$r_3$) / ($r_4$-$r_1$) > 0, 1; und/oder wobei:
$0 \leq T_1/\max(T_2,T_3) < 0,5$ und $0 \leq T_4/\max(T_2,T_3) < 0,5$, wobei $\max(T_2,T_3)$ eine Funktion ist, die den maximalen Wert zwischen $T_2$ und $T_3$ auswählt.

12. Optische Vorrichtung nach einem der Ansprüche 9 bis 11, wobei der erste und der zweite Objektabstand jeweils einer ersten und einer zweiten optischen Leistung der optischen Vorrichtung entsprechen, und wobei optische Leistungen zwischen der ersten und der zweiten optischen Leistung einen Unterbereich von optischen Leistungen des Bereichs von optischen Leistungen ausbilden,

wobei die multifokale optische Vorrichtung (30) eine radiusabhängige multifokale optische Vorrichtung mit einer Brennweite ist, die mit einem Radius in Bezug auf eine optische Achse der multifokalen optischen Vorrichtung variiert,
und wobei eine erste Brennweite der multifokalen Vorrichtung bei einem ersten Radius und eine zweite Brennweite der multifokalen Vorrichtung bei einem zweiten Radius zu jeweils der ersten und der zweiten optischen Leistung der optischen Vorrichtung beitragen,
wobei der erste Radius kleiner als der zweite Radius ist, und
wobei die ersten, zweiten, dritten und vierten radialen Abstände der einen oder der mehreren eindimensionalen Lichttransmissionskurven (T) so definiert sind, dass Lichtstrahlen, die die multifokale optische Vorrichtung (30) an dem ersten Radius durchdringen oder austreten, den Filter zwischen dem ersten ($r_1$) und dem zweiten ($r_2$) radialen Abstand durchdringen und Lichtstrahlen, die die multifokale optische Vorrichtung (30) an dem zweiten Radius durchdringen oder austreten, den Filter zwischen dem dritten ($r_3$) und vierten ($r_4$) radialen Abstand durchdringen.

13. Optische Vorrichtung nach einem der Ansprüche 9 bis 12, wobei die multifokale optische Vorrichtung ein Axikon, wie etwa ein lineares Axikon oder ein logarithmisches Axikon, umfasst, wobei die optische Vorrichtung ein Mittel zum Reduzieren von Astigmatismus-Aberrationen umfasst, die durch die multifokale optische Vorrichtung (30) erzeugt werden, und wobei das Mittel eine plankonkave Linse (35) umfasst oder die multifokale optische Vorrichtung (30) eine Oberfläche mit einer plankonkaven Form umfasst.

14. Kamerasystem, umfassend

• eine optische Vorrichtung (1) nach einem der Ansprüche 9 bis 13,
• einen Bildsensor, der so konfiguriert ist, dass eine Erfassungsebene des Bildsensors mit der Bildebene (IP) des Abbildungslinsensystems (20) zusammenfällt,
• eine Bildverarbeitungseinheit, umfassend einen Dekonvolutionsalgorithmus zum Verarbeiten eines Bildes, das auf der Erfassungsebene des Bildsensors erfasst wird, und zum Ausgeben eines dekonvolvierten Bildes, und wobei die Bildverarbeitungseinheit Daten umfasst, die eine Modellpunktspreizfunktion ausdrücken, und/oder wobei die Verarbeitungseinheit zum Erzeugen einer mathematischen Gleichung konfiguriert ist, die eine Modellpunktspreizfunktion ausdrückt, und wobei die Modellpunktspreizfunktion für jede der verschiedenen Punktspreizfunktionen ($PSF_i$) repräsentativ ist, die den verschiedenen Objektabständen ($OD_i$) innerhalb der erweiterten Schärfentiefe zugeordnet sind.

**15.** Mikroskopanordnung, umfassend

• ein Mikroskop, das so konfiguriert ist, dass es ein Zwischenbild eines Objekts ausbildet,
• eine optische Vorrichtung nach einem der Ansprüche 9 bis 13, die mit dem Mikroskop gekoppelt ist, um das Zwischenbild durch das Abbildungslinsensystem (20) abzubilden und ein Bild auf der Bildebene (IP) auszubilden.

**Revendications**

**1.** Procédé pour obtenir une image avec une profondeur de champ étendue s'étendant entre une première distance d'objet et une seconde distance d'objet, ledit procédé comprenant :

• l'utilisation d'un dispositif optique (1) pour prendre une image d'un objet ou une image intermédiaire d'un objet sur un plan d'image (IP), et dans lequel le dispositif optique (1) comprend un système de lentilles d'imagerie (20) et un dispositif optique multifocal (30),
• l'utilisation du dispositif optique multifocal (30) pour faire varier une puissance optique du dispositif optique (1) à l'intérieur d'une plage de puissances optiques, de sorte qu'une image formée au niveau du plan d'image (IP) corresponde à une somme d'images obtenues à différentes puissances optiques, et dans lequel ladite plage de puissances optiques est définie en relation à ladite profondeur de champ étendue,

**caractérisé en ce que** ledit procédé comprend en outre :

• la modulation d'une amplitude de rayons lumineux transmis à travers le dispositif optique multifocal (30) en utilisant un filtre (50), et dans lequel un profil de transmission de lumière bidimensionnel associé au filtre (50) exprime une transmission de lumière relative à travers le filtre,
• la spécification dudit profil de transmission de lumière bidimensionnel avec une ou plusieurs courbes de transmission de lumière unidimensionnelles (T), et dans lequel chaque courbe de transmission de lumière unidimensionnelle (T) exprime une transmission de lumière relative à travers le filtre comme une fonction d'une distance radiale mesurée dans une direction radiale (R) par rapport à un axe de référence de filtre (k) du filtre, et définit chacune desdites une ou plusieurs courbes de transmission de lumière unidimensionnelles (T) comme une courbe de transmission à ouverture en forme d'anneau, de sorte que pour chaque distance d'objet ($OD_i$) à l'intérieur de ladite profondeur de champ étendue, une fonction d'étalement ponctuel ($PSF_i$) associée à la distance d'objet ($OD_i$) a une intensité de rayons lumineux hors foyer au niveau du plan d'image (IP) qui est réduite en comparaison à une intensité de rayons lumineux hors foyer sans l'utilisation du filtre, et
• la définition de chaque courbe pour qu'elle comprenne :

a) une portion croissante de façon monotone allant d'une première valeur de transmission de lumière ($T_1$) à une première distance radiale ($r_1$) jusqu'à une deuxième valeur de transmission de lumière ($T_2$) à une deuxième distance radiale ($r_2$),
b) une portion décroissante de façon monotone allant d'une troisième valeur de transmission de lumière ($T_3$) à une troisième distance radiale ($r_3$) jusqu'à une quatrième valeur de transmission de lumière ($T_4$) à une quatrième distance radiale ($r_4$), et dans lequel $r_1 < r_2 \leq r_3 < r_4$, avec $r_1$, $r_2$, $r_3$ et $r_4$ représentant respectivement ladite première, ladite deuxième, ladite troisième et ladite quatrième distance radiale,
dans lequel la transmission de lumière dans une région entre l'axe de référence de filtre (k) et la première distance radiale ($r_1$) est à l'intérieur d'une plage : $0 \leq T_{r1-k}[r] \leq 1,2 \times T_1$, avec $T_{r1-k}[r]$ correspondant à ladite transmission dans une région entre la première distance radiale ($r_1$) et l'axe de référence de filtre (k), et $T_1$ correspondant à ladite première valeur de transmission,
et dans lequel $T_1/T_2 \leq 0,5$ et $T_4/T_3 \leq 0,5$, avec $T_2$, $T_3$ et $T_4$ correspondant respectivement auxdites deuxième, troisième et quatrième valeurs de transmission de lumière.

**2.** Procédé selon la revendication 1, dans lequel lesdites première, deuxième, troisième et quatrième distances radiales sont déterminées de sorte que :

$$(r_2 - r_1) / (r_4 - r_1) > 0,1$$

et/ou

$$(r_4 - r_3) / (r_4 - r_1) > 0,1,$$

et/ou dans lequel lesdites première, deuxième et troisième valeurs de transmission de lumière sont déterminées de sorte que :
$0 \leq T_1 / \max(T_2, T_3) < 0,5$ et $0 \leq T_4 / \max(T_2, T_3) < 0,5$, où $\max(T_2, T_3)$ est une fonction sélectionnant la valeur maximale entre $T_2$ et $T_3$.

**3.** Procédé selon la revendication 1 ou la revendication 2, dans lequel lesdites première, deuxième et troisième valeurs de transmission de lumière sont déterminées de sorte que :
$0 \leq T_1 / \max(T_2, T_3) < 0,5$ et $0 \leq T_4 / \max(T_2, T_3) < 0,5$, où $\max(T_2, T_3)$ est une fonction sélectionnant la valeur maximale entre $T_2$ et $T_3$.

**4.** Procédé selon l'une quelconque des revendications 1 à 3, dans lequel ladite première et ladite seconde distance d'objet correspondent respectivement à une première et à une deuxième puissance optique du dispositif optique, et dans lequel le procédé comprend :

• la définition de ladite plage de puissances optiques de sorte que des puissances optiques entre ladite première et ladite deuxième puissance optique forment une sous-plage de ladite plage de puissances optiques.

**5.** Procédé selon la revendication 4, dans lequel le dispositif optique multifocal (30) est un dispositif optique multifocal dépendant du rayon ayant une longueur focale variant avec un rayon par rapport à un axe optique du dispositif optique multifocal, et dans lequel une première longueur focale du dispositif multifocal à un premier rayon et une deuxième longueur focale du dispositif multifocal à un deuxième rayon contribuent respectivement à ladite première et à ladite deuxième puissance optique du dispositif optique, et dans lequel le premier rayon est plus petit que le deuxième rayon.

**6.** Procédé selon la revendication 5, comprenant en outre :

• la définition desdites première, deuxième, troisième et quatrième distances radiales de la ou des plusieurs courbes de transmission de lumière unidimensionnelles (T) de sorte que des rayons lumineux interceptant ledit dispositif optique multifocal (30) ou sortant de ce dernier au niveau dudit premier rayon interceptent ledit filtre (50) entre la première ($r_1$) et la deuxième ($r_2$) distance radiale, et que des rayons lumineux interceptant ledit dispositif optique multifocal (30) ou sortant de ce dernier au niveau dudit deuxième rayon interceptent le filtre entre la troisième ($r_3$) et la quatrième ($r_4$) distance radiale.

**7.** Procédé selon l'une quelconque des revendications précédentes, dans lequel ledit dispositif optique multifocal comprend un axicon, tel qu'un axicon linéaire ou un axicon logarithmique.

**8.** Procédé selon l'une quelconque des revendications précédentes, dans lequel ledit dispositif optique a un rapport d'extension d'au moins un facteur 3, et dans lequel ledit rapport d'extension est défini comme le rapport entre ladite profondeur de champ étendue et une profondeur de champ limitée par diffraction obtenue avec un système de lentilles d'imagerie sans dispositif optique multifocal mais avec une résolution optique identique au dispositif optique ayant la profondeur de champ étendue.

**9.** Dispositif optique (1) pour prendre une image d'un objet ou une image intermédiaire d'un objet sur un plan d'image (IP) et pour obtenir une image ayant une profondeur de champ étendue entre une première distance d'objet et une seconde distance d'objet, le dispositif optique comprenant :

• un système de lentilles d'imagerie (20),
• un dispositif optique multifocal (30) configuré pour faire varier une puissance optique du dispositif optique (1) à l'intérieur d'une plage de puissances optiques, de sorte qu'une image formée au niveau du plan d'image corresponde à une somme d'images obtenues à différentes puissances optiques, et dans lequel ladite plage de puissances optiques est définie en relation à ladite profondeur de champ étendue,
**caractérisé en ce que** ledit dispositif optique (1) comprend :

• un filtre (50) configuré pour moduler une amplitude de rayons lumineux transmis à travers le dispositif optique multifocal (30), et dans lequel un profil de transmission de lumière bidimensionnel associé au filtre exprime une transmission de lumière relative à travers le filtre,

**et en ce que** ledit profil de transmission de lumière bidimensionnel est spécifié avec une ou plusieurs courbes de transmission de lumière unidimensionnelles (T), et dans lequel chaque courbe de transmission de lumière unidimensionnelle (T) exprime une transmission de lumière relative à travers le filtre comme une fonction d'une distance radiale mesurée dans une direction radiale (R) par rapport à un axe de référence de filtre (k), et dans lequel chacune desdites une ou plusieurs courbes de transmission de lumière unidimensionnelles (T) est définie comme une courbe de transmission à ouverture en forme d'anneau comprenant :

a) une portion croissante de façon monotone allant d'une première valeur de transmission de lumière ($T_1$) à une première distance radiale ($r_1$) jusqu'à une deuxième valeur de transmission de lumière ($T_2$) à une deuxième distance radiale ($r_2$),
b) une portion décroissante de façon monotone allant d'une troisième valeur de transmission de lumière ($T_3$) à une troisième distance radiale ($r_3$) jusqu'à une quatrième valeur de transmission de lumière ($T_4$) à une quatrième distance radiale ($r_4$), et dans laquelle $r_1 < r_2 \le r_3 < r_4$, avec $r_1$, $r_2$, $r_3$, $r_4$ représentant respectivement ladite première, ladite deuxième, ladite troisième et ladite quatrième distance radiale,

dans lequel la transmission de lumière dans une région entre l'axe de référence de filtre (k) et la première distance radiale ($r_1$) est à l'intérieur d'une plage : $0 \le T_{r1-k}[r] \le 1,2 \times T_1$, avec $T_{r1-k}[r]$ correspondant à ladite transmission dans une région entre la première distance radiale ($r_1$) et l'axe de référence de filtre (k), et $T_1$ correspondant à ladite première valeur de transmission,
et dans lequel $T_1/T_2 \le 0,5$ et $T_4/T_3 \le 0,5$, avec $T_2$, $T_3$ et T4 correspondant respectivement auxdites deuxième, troisième et quatrième valeurs de transmission de lumière.

10. Dispositif optique selon la revendication 9, dans lequel $r_2 < r_3$, et dans lequel une transmission de lumière dans une région entre la deuxième et la troisième distance radiale est à l'intérieur d'une plage :

$$0,8 \times (T_2 + T_3) / 2 \le T_{r2-r3}[r] \le 1,2 \times (T_2 + T_3) / 2,$$

avec $T_{r2-r3}[r]$ correspondant à ladite transmission de lumière dans une région entre la deuxième et la troisième distance radiale.

11. Dispositif optique selon la revendication 9 ou la revendication 10, dans lequel :

$$(r_2 - r_1) / (r_4 - r_1) > 0,1$$

et/ou

$$(r_4 - r_3) / (r_4 - r_1) > 0,1 ;$$

et/ou dans lequel :

$$0 \le T_1 / \max(T_2, T_3) < 0,5 \text{ et } 0 \le T_4 / \max(T_2, T_3) < 0,5,$$

où $\max(T_2, T_3)$ est une fonction sélectionnant la valeur maximale entre $T_2$ et $T_3$.

12. Dispositif optique selon l'une quelconque des revendications 9 à 11, dans lequel ladite première et ladite seconde distance d'objet correspondent respectivement à une première et à une deuxième puissance optique du dispositif optique, et dans lequel des puissances optiques entre ladite première et ladite deuxième puissance optique forment une sous-plage de puissances optiques de ladite plage de puissances optiques,

dans lequel le dispositif optique multifocal (30) est un dispositif optique multifocal dépendant du rayon ayant une longueur focale variant avec un rayon par rapport à un axe optique du dispositif optique multifocal, et dans lequel une première longueur focale du dispositif multifocal à un premier rayon et une deuxième longueur focale du dispositif multifocal à un deuxième rayon contribuent respectivement à ladite première et à ladite deuxième puissance optique du dispositif optique, et avec ledit premier rayon qui est plus petit que ledit deuxième rayon, et dans lequel lesdites première, deuxième, troisième et quatrième distances radiales des une ou plusieurs courbes de transmission de lumière unidimensionnelles (T) sont définies de sorte que des rayons lumineux interceptant ledit dispositif optique multifocal (30) ou sortant de ce dernier au niveau dudit premier rayon interceptent ledit filtre entre la première ($r_1$) et la deuxième ($r_2$) distance radiale et que des rayons lumineux interceptant ledit dispositif optique multifocal (30) ou sortant de ce dernier au niveau dudit deuxième rayon interceptent le filtre entre la troisième ($r_3$) et la quatrième ($r_4$) distance radiale.

13. Dispositif optique selon l'une quelconque des revendications 9 à 12, dans lequel le dispositif optique multifocal comprend un axicon, tel qu'un axicon linéaire ou un axicon logarithmique, le dispositif optique comprenant des moyens pour réduire des aberrations astigmatiques générées par le dispositif optique multifocal (30), et dans lequel lesdits moyens comprennent une lentille plano-concave (35) ou ledit dispositif optique multifocal (30) comprend une surface ayant une forme plano-concave.

14. Système d'appareil de prise de vues comprenant :

   • un dispositif optique (1) selon l'une quelconque des revendications 9 à 13,
   • un capteur d'image configuré de sorte qu'un plan de détection du capteur d'image coïncide avec le plan d'image (IP) du système de lentilles d'imagerie (20),
   • une unité de traitement d'image comprenant un algorithme de déconvolution pour traiter une image acquise sur ledit plan de détection du capteur d'image et pour produire une image déconvoluée, et dans lequel ladite unité de traitement d'image comprend des données exprimant une fonction d'étalement ponctuel modèle et/ou dans lequel l'unité de traitement est configurée pour générer une équation mathématique exprimant une fonction d'étalement ponctuel modèle, et dans lequel ladite fonction d'étalement ponctuel modèle est représentative de chacune des différentes fonctions d'étalement ponctuel ($PSF_i$) associées aux différentes distances d'objet ($OD_i$) à l'intérieur de la profondeur de champ étendue.

15. Ensemble microscope comprenant :

   • un microscope configuré pour former une image intermédiaire d'un objet,
   • un dispositif optique selon l'une quelconque des revendications 9 à 13 couplé audit microscope pour prendre une image de ladite image intermédiaire à travers le système de lentilles d'imagerie (20) et pour former une image sur ledit plan d'image (IP).

Fig. 1

Fig. 2

Fig. 3

Fig.4

Fig. 5

Fig. 6

Fig. 7

EP 4 055 421 B1

Fig. 8

Fig. 9

Fig. 10a

Fig. 10b

Fig. 10c

Fig. 10d

EP 4 055 421 B1

Fig. 10f

Fig. 10e

Fig. 10g

Fig. 10h

Fig. 10i

EP 4 055 421 B1

Fig.11c

Fig. 11b

Fig. 11a

Fig. 11d

Fig. 12c

Fig. 12a

Fig. 12b

Fig. 13

Fig. 15a  Fig. 15b  Fig. 15c

EP 4 055 421 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 10101572 B2
- US 7593161 B2
- US 7593161 B
- US 2016057337 A1
- WO 2012166995 A2

**Non-patent literature cited in the description**

- **ZHAI et al.** *Journal of Modern Optics,* 2009, vol. 56 (11), 1304-1308